(19) Europäisches Patentamt
European Patent Office
Office européen des brevets

(11) **EP 2 375 380 B1**

(12) **EUROPÄISCHE PATENTSCHRIFT**

(45) Veröffentlichungstag und Bekanntmachung des Hinweises auf die Patenterteilung:
**12.02.2014  Patentblatt 2014/07**

(51) Int Cl.:
*G06T 7/00* *(2006.01)*        *B07C 1/04* *(2006.01)*
*G01D 1/16* *(2006.01)*        *G06M 7/00* *(2006.01)*

(21) Anmeldenummer: **11160922.8**

(22) Anmeldetag: **01.04.2011**

(54) **Verfahren und Vorrichtung zum Messen eines Parameters während des Transports von Gegenständen zu einer Verarbeitungs-Einrichtung**

Method and device for measuring a parameter during the transport of objects to a processing device

Procédé et dispositif de mesure d'un paramètre lors du transport d'objets vers un dispositif de traitement

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2010  DE 102010013677**

(43) Veröffentlichungstag der Anmeldung:
**12.10.2011  Patentblatt 2011/41**

(73) Patentinhaber: **Siemens Aktiengesellschaft
80333 München (DE)**

(72) Erfinder: **Rompe, Andre
12621, Berlin Kaulsdorf (DE)**

(56) Entgegenhaltungen:
**WO-A1-2007/000441     US-A- 5 141 097**

• **LOPEZ M ET AL: "Passenger density measurement in a train carriage using image processing", TRANSPORTATION SYSTEMS 1997 : A PROCEEDINGS VOLUME FROM THE 8TH IFAC/IFIP/IFORS SYMPOSIUM, CHANIA, GREECE, 16-18 JUNE 1997, OXFORD, Bd. 3, 1. Januar 1997 (1997-01-01), Seiten 961-966, XP009150834, ISBN: 0-08-042931-9**

**Beschreibung**

Die Erfindung betrifft ein Verfahren und eine Vorrichtung, um einen Parameter zu messen, der den Transport von Gegenständen beschreibt. Diese Gegenstände werden mittels einer Transport-Einrichtung transportiert.

Die Aufgabe, diesen Parameter während des Transports zu messen, ist insbesondere dann zu lösen, wenn die Transport-Einrichtung die Gegenstände zu einer Verarbeitungs-Einrichtung transportiert und die Menge von Gegenständen, die pro Zeiteinheit die Verarbeitungs-Einrichtung durchlaufen, in einem vorgegebenen Bereich bleiben soll. Dieser Soll-Bereich hängt von der Verarbeitungskapazität der Verarbeitungs-Einrichtung ab.

In WO 2007/000441 A1 wird ein Verfahren beschrieben, um den Transport und die Auswahl von Gegenständen, z. B. Obst u.ä., zu überwachen und zu regeln. Die Gegenstände werden auf ein erstes Förderband 3 geschüttet und werden von diesem Förderband 3 unter einer Zählanordnung 11 hindurch zu einem zweiten Förderband 5 transportiert. Die Zählanordnung 11 bestimmt laufend die Anzahl von transportierten Gegenständen in einem Flächenbereich A auf der Oberfläche des ersten Förderbandes 3. Die Zählanordnung 11 umfasst eine Kamera, die laufend Abbilder vom Flächenbereich A aufnimmt und den "degree of filling" des Flächenbereichs A, den die Gegenstände 2 bedecken, bewirken, ermittelt. Hierzu verwendet die Zählanordnung 11 die Anzahl der Gegenstände und leitet hieraus den "degree of filling" ab, vgl. S. 6/1. Abs. Abhängig von der ermittelten Anzahl verändert ein Regler 14 die Transportgeschwindigkeit des ersten Förderbands 3, um die Menge von transportierten Gegenständen in einem vorgegebenen Bereich zu halten.

In US 5,141,097 und DE 41 29 135 A1 werden eine Vorrichtung und ein Verfahren zum geregelten Transportieren von Gegenständen beschrieben. Die Vorrichtung transportiert Postsendungen in Form von Paketen zu einer Formattrenn-Einrichtung mit einer Trommel ("separation drum"). Die Postsendungen liegen auf einer Zuführ-Einrichtung mit zwei waagrechten Endlos-Förderbändern. Eine Kamera erzeugt von oben ein Abbild von den Postsendungen, die auf dem flussabwärts gelegenen Zuführ-Förderband liegen. Hierfür wird das Endlos-Förderband von oben beleuchtet. Durch Auswertung des Abbilds wird gezählt, wie viele Postsendungen auf dem Zuführ-Förderband liegen. Abhängig von der Anzahl wird die Transportgeschwindigkeit geregelt, mit der das Endlos-Förderband Postsendungen zur Formattrenneinrichtung transportiert. Ein Regler steuert einen Antriebsmotor des Endlos-Förderbands entsprechend an.

Im Ausführungsbeispiel von US 5,141,097 und DE 41 29 135 A1 sind die zu transportierenden Postsendungen Pakete, die beabstandet zueinander auf der Zuführ-Einrichtung liegen und in allen drei Dimensionen je eine relevante Abmessung haben. Wenn hingegen der Transport von flachen Gegenständen, z. B. Briefen, durch das in US 5,141,097 beschriebene Verfahren geregelt werden soll, so tritt das Problem auf, dass mehrere Gegenstände - gesehen in die Abbildungsrichtung der Kamera - übereinander liegen oder sich überlappen. In diesem Fall ist es oft überhaupt nicht möglich, die Gegenstände direkt zu zählen. Auf jeden Fall erfordert eine direkte Zählung eine aufwendige Bildverarbeitung und/oder zusätzliche Sensorik. Eine direkte Zählung würde trotzdem oft zu erheblichen Fehlern führen.

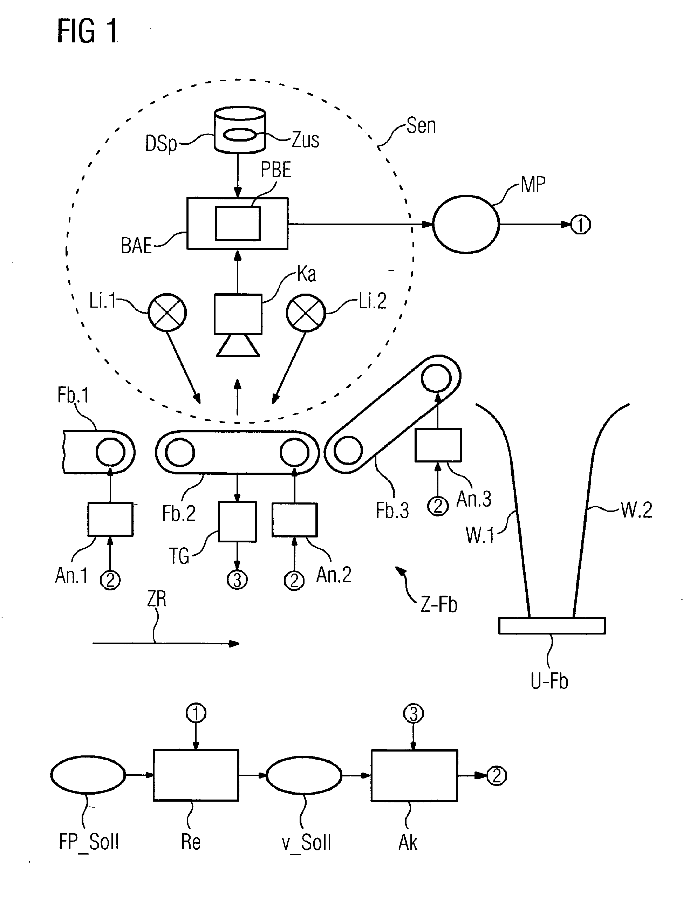

In DE 41 29 142 A1 wird eine Vorrichtung beschrieben, die den Transport von Paketen oder Frachtgut überwacht und regelt. Die Pakete 2 werden von einem ersten Förderband 1 zu einer Beschickungstrommel 4 mit innen liegenden Schaufeln 5 transportiert, vgl. Fig. 1. Die Pakete 2 rutschen aus der Trommel 3 auf ein weiteres Transportband 10, bestehend aus zwei einzelnen Förderbändern 10a und 10b. Eine Lichtschranke 11 misst, wann ein Paket 2 über den Schlitz zwischen diesen Förderbändern 10a, 10b hinweg transportiert wird. Die Lichtschranke 11 hat mehrere Zellen 12 und erstreckt sich über die gesamte Breite des Schlitzes hinweg. Mittels der Messwerte von der Lichtschranke 11 und der Transportgeschwindigkeit des Transportbandes 10 wird der Abstand zwischen zwei Paketen 2 geregelt. Eine Videokamera 23 oberhalb des Förderbandes 10 liefert Abbilder, die ausgewertet werden, um zu erkennen, wann zwei Pakete sich überlappen oder übereinanderliegen. Derartige Pakete werden von einer Ablenkplatte 20 vom Förderband 10 auf ein weiteres Förderband 22 verbracht. Um Überlappungen zu erkennen, wird ein aufbereitetes Bild von der Videokamera 23 in mehreren Stufen ausgewertet. In diesen Stufen werden die Konturen der abgebildeten Objekte erkannt, die Silhouette wird extrahiert, die Silhouette wird durch ein Polygon approximiert, und das Polygon wird auf Konvexität untersucht.

In US 4,940,536 wird eine Anordnung beschrieben, welche kugelförmige Gegenstände, z. B. Obst oder Kartoffeln, sortiert. Die Gegenstände werden auf ein erstes Förderband ("conveyor 1") geschüttet, welches die Gegenstände transportiert. Die transportierten Gegenstände passieren eine "inspection region A-B", wobei die Gegenstände gedreht werden. Eine Kamera 33 oberhalb des ersten Förderbands 1 erzeugt mittels eines Spiegels 32 Abbilder von diesem Messstrichausschnitt A-B mit transportierten Gegenständen. Fig. 9 veranschaulicht einen solchen Messausschnitt A-B. Vier Rollen 84, 85, 86, 87 bewegen sich alle in Richtung des Pfeils 88 und drehen hierbei die Gegenstände, welche sich in den Spalten ("gaps") 80, 81, 82 zwischen den Rollen 84, 85, 86, 87 befinden. Fig. 10 zeigt den jeweiligen zeitlichen Verlauf mehrerer Signale, darunter den Verlauf 91, der gemessenen Lumineszenz, der von den Gegenständen in der Spalte 80 erzeugt wird. Dieser zeitliche Verlauf 91 wird aufbereitet, und der aufbereitete Verlauf 92 zeigt deutlich, wo - gesehen über die Breite des Spalts 80 - sich Gegenstände im Spalt 80 befinden und wo nicht. Dadurch lassen die Gegenstände sich zählen, und ihre räumliche Ausdehnung lässt sich ermitteln.

In US 2002/0046923 A1 wird eine Anordnung beschrieben, welche transportierte Gegenstände in eine Schlange ("queue") von aufeinanderfolgenden Gegenständen verbringt. Diese Anordnung umfasst im Ausführungsbeispiel fünf aufeinanderfolgende Endlos-Förderbänder 1, 2, 3, 4, 5, die um waagerechte Achsen und Rollen herumgeführt sind. Flache Gegenstände 15 werden auf das erste Förderband 1 geschüttet und von der Abfolge von Förderbändern 1, 2, 3, 4, 5 transportiert. Das vierte Förderband 4 besitzt eine Vielzahl einzelner Endlos-Förderbänder 11a bis 11j, die parallel zueinander ("juxtaposed side by side") angeordnet sind und sich unabhängig voneinander ein- und ausschalten lassen und in eine Ausgestaltung mit unterschiedlichen Geschwindigkeiten 28 antreiben lassen. Eine Kamera 23 oberhalb der Förderbänder nimmt die Bilder von der Oberfläche der Förderbänder 3 und 4 auf und übermittelt diese Abbilder an einen Regler 24, der die Antriebe für die Einzel-Förderbänder 11a bis 11j ansteuert.

In DE 1160792 A wird eine Einrichtung zum gleichmäßigen Beschicken einer Förderstrecke mit flachen Postsendungen beschrieben. Die schwankende Förderdichte in der Förderstrecke soll ausgeglichen werden. Ein Steuerungsmittel verändert die Geschwindigkeit, mit der ein Förderband der Förderstrecke diese Postsendungen transportiert. Am Anfang des abschüssig geneigten Förderbands ist eine Lichtschranke 12, 12' angeordnet. Diese Lichtschranke 12, 12' fungiert als ein Sensor für einen Regler, der den Antrieb des Förderbands ansteuert.

In DE 42 40 094 C2 wird eine Vorrichtung beschrieben, die eine Förderanlage mit Gurtbandförderer überwacht. Der Gurtbandförderer 2 transportiert Schüttgut mittels eines bewegten Gurtbands 3. Eine CCD-Kamera 6 nimmt von oben Bilder auf, wobei der jeweilige Bildausschnitt 8 über die gesamte Breite des Gurtbandförderers 3 reicht, vgl. die Stirnansicht von Fig. 1. Zwischen den beiden Kanten des Gurtbandes 3 und den Traggerüst 5 tritt jeweils ein Abstand AL bzw. AR auf, zwischen dem Fördergut und den Kanten jeweils ein Abstand BL bzw. BR. Eine weitere Kamera 23a erzeugt Abbilder von der Unterseite des Gurtbandförderers 2. Ermittelt werden die Muldung $\beta$, also die Durchbiegung des Gurtbandes 3 aufgrund de Gewichtskraft des Schüttguts, der Verlauf der Oberkante OK des Schüttguts und die Querschnittsfläche F. Die Querschnittsfläche F ist die vom Schüttgut eingenommene Fläche in einer gedachten senkrechten Ebene, die auch senkrecht auf der Transportrichtung des Förderguts steht. Hierfür werden die Abstände AL, AR, BL, BR sowie die Kontur OK aus den Signalen der Kamera 6 ermittelt. In den Abbildern wird das Schüttgut vom Traggerüst 5 unterschieden, indem aufeinanderfolgende Abbilder subtrahiert werden. Außerdem werden mehrere Differenzbilder akkumuliert. Um die Querschnittsfläche F zu bestimmen, werden vorab mehrere Gurtbandprofile bei unterschiedlichen Belastungen experimentell ermittelt und abgespeichert ("offline"). Oder es werden mittels der unteren Kamera 23 das Gurtbandprofil on-line ermittelt. Die Querschnittsfläche F wird mittels der Muldung $\beta$, des Profils und der Oberflächenkontur OK berechnet. Aus der Fläche F und der Fördergeschwindigkeit wird das transportierte Fördervolumen bestimmt. Die Ist-Abstände BL, BR werden außerdem mit Sollwerten BL_Soll, BR_Soll verglichen.

In US 3,373,685 und in CH 463846 wird eine "letter mail handling machine" beschrieben. Ein Förderband transportiert Postsendungen zu einer "primary separator section" und von dort zu einer "secondary separator section". Sensoren überwachen diesen Brieflauf.

In M. Lopez, S. A. Velastin and M. Rodrigez: "Passenger density measurement in a train carriage using image processing", Proceed. 8th IFAC/IFIP/IFORS Symposium, Chania, Greece, 16. - 18. Juni 1997, pp. 961 - 966, wird ein Verfahren beschrieben, um durch Bildauswertung zu zählen, wie viele Personen sich in einem bestimmten Bereich aufhalten, z. B. im Eingangsbereich eines Zuges. Ein Videobild von dem Bereich wird aufgenommen, wobei das Videobild Personen zeigt. Dieses Videobild wird binarisiert. Berechnet wird, wie viele Bildpunkte ("pixels") von Personen belegt sind und wie viele "pixels" vom Hintergrund. Dadurch wird eine "occupation ratio" als prozentualer Anteil berechnet. Eine Regressionsanalyse zeigt einen annähernd linearen Zusammenhang zwischen der tatsächlichen Anzahl von Personen, die manuell gezählt wurde, und der "occupation ratio". Dieser funktionale Zusammenhang, der durch Regressionsanalyse gewonnen wird, lässt sich dazu verwenden, um die Anzahl von Personen in einem nicht bekannten Bild zu schätzen, indem die "image occupation ratio" ermittelt wird. In einem Anwendungsbeispiel wird die Anzahl von Personen gezählt, die von außen durch eine Türöffnung eines Metro-Zugs sichtbar sind.

Der Erfindung liegt die Aufgabe zugrunde, ein Verfahren und eine Vorrichtung bereitzustellen, die auch dann eine Messung und bei Bedarf eine Regelung ermöglichen, wenn es passieren kann, dass Gegenstände auf der Förder-Komponente übereinander liegen und daher eine Zählung der Gegenstände auf der Förder-Komponente überhaupt nicht möglich ist.

Die Aufgabe wird durch ein Verfahren mit den Merkmalen des Anspruchs 1 und eine Anordnung mit den Merkmalen des Anspruchs 11 gelöst, welche auch den Schutzbereich der Erfindung festlegen. Vorteilhafte Ausgestaltungen sind in den Unteransprüchen angegeben.

Mehrere Gegenstände liegen auf einer Förder-Komponente einer Transport-Einrichtung. Die Transport-Einrichtung bewegt diese Förder-Komponente. Die Förder-Komponente transportiert die Gegenstände dadurch mit einer zeitlich veränderbaren Transportgeschwindigkeit.

An mindestens einem Aufnahme-Zeitpunkt wird mindestens eine rechnerverfügbare und rechnerauswertbare Aufnahme von einem Mess-Ausschnitt der Förder-Komponente aufgenommen. Diese mindestens eine Aufnahme wird ausgewertet. Dadurch wird für jeden Aufnahme-Zeitpunkt jeweils ein Wert eines Mengen-Parameters berechnet. Dieser Mengen-Parameter-Wert beschreibt die Menge von transportierten Gegenständen zum jeweiligen Aufnahme-Zeitpunkt. Der Mengen-Parameter hängt ab von der Menge der Gegenstände, die auf der Förder-Komponente liegen und transportiert werden.

Abhängig von dem mindestens einen gemessenen Mengen-Parameter-Wert wird die Transportgeschwindigkeit der Förder-Komponente verändert. Möglich ist natürlich ist, dass die Transportgeschwindigkeit bereits den richtigen Wert hat und nicht mehr verändert zu werden braucht.

Lösungsgemäß wird zu jedem Aufnahme-Zeitpunkt gemessen, welcher relative Anteil des Mess-Ausschnitts von zu transportierenden Gegenständen, die zum Aufnahme-Zeitpunkt im Mess-Ausschnitt auf der Förder-Komponente liegen, jeweils bedeckt wird. Weil die Förder-Komponente bewegt wird und dadurch auch relativ zu einem Bildaufnahmegerät für die rechnerverfügbaren Aufnahmen bewegt wird, fungiert jeweils ein anderer Teil der Förderkomponente als Mess-Ausschnitt.

Der von transportierten Gegenständen bedeckte Anteil wird als die von Gegenständen bedeckte Fläche bezogen auf die gesamte Fläche des Mess-Ausschnitts berechnet. Um diesen bedeckten Anteil zu berechnen, wird die mindestens eine Aufnahme des Mess-Ausschnitts automatisch ausgewertet, die zum Aufnahme-Zeitpunkt aufgenommen wurde.

Ein rechnerausführbarer funktionaler Zusammenhang zwischen

- dem zu messenden Mengen-Parameter und

- dem bedeckten Anteil des Mess-Ausschnitts

wird vorgegeben und in einem Datenspeicher abgespeichert. Der Wert, den der Mengen-Parameter zum Aufnahme-Zeitpunkt annimmt, wird berechnet. Hierfür werden der gemessene bedeckte Anteil und der vorgegebene funktionale Zusammenhang verwendet. Der funktionale Zusammenhang wird automatisch auf den gemessenen bedeckten Anteil angewendet, um den Wert des Mengen-Parameters zu bestimmen.

Lösungsgemäß wird gemessen, welche Fläche in dem Mess-Ausschnitt auf der Förder-Komponente von zu transportierenden Gegenständen bedeckt wird. Diese bedeckte Fläche lässt sich auch dann messen, wenn mehrere zu transportierende Gegenstände im Mess-Ausschnitt teilweise übereinander liegen. Dieser Fall kann insbesondere bei flachen Gegenständen auftreten, die auf der Förder-Komponente liegen. Daher lässt sich das Verfahren auch dann anwenden, wenn mehrere Gegenstände - gesehen in die Abbildungsrichtung eines verwendeten Bildaufnahmegeräts - sich wenigstens teilweise überlappen oder sogar ein Gegenstand einen anderen Gegenstand auf der Förder-Komponente zu einem großen Teil verdeckt.

Die Erfindung ermöglicht daher folgendes Vorgehen: Vorgegeben werden ein zeitlich veränderlicher Fluss-Parameter sowie ein Sollbereich. Der Fluss-Parameter beschreibt den Fluss von Gegenständen, die von der Transport-Einrichtung zu einer Verarbeitungs-Einrichtung transportiert werden. Der Sollbereich liegt im Wertebereich des Fluss-Parameters. Der Wert dieses Fluss-Parameters soll in dem vorgegebenen Sollbereich liegen, wobei der Sollbereich z. B. von der Verarbeitungskapazität der Verarbeitungs-Einrichtung abhängt. Ein Regler regelt die Transportgeschwindigkeit der Förder-Komponente dergestalt, dass der Istwert des Fluss-Parameters stets im Sollbereich bleibt. Für die Regelung der Transportgeschwindigkeit erhält der Regler wiederholt jeweils mindestens einen Messwert von dem lösungsgemäßen Sensor. Diese Messwerte vom Mengen-Parameter sind mit einem deutlich geringeren Fehler behaftet als bei einem direkten Zählen, wie viele Gegenstände auf der Förder-Komponente liegen. Um die Geschwindigkeit der Förder-Komponente zu regeln, wird ein lösungsgemäßer Sensor eingesetzt, der jeweils einen Wert des Mengen-Parameters zu jedem Aufnahme-Zeitpunkt liefert. Außerdem liefert der lösungsgemäße Sensor die Mengen-Parameter-Werte bei gleicher Rechenleistung schneller, als wenn der Sensor die dargestellten Gegenstände im Abbild direkt zählen müsste. Das Verfahren ermöglicht daher wahlweise, bei gleicher Rechenleistung eine höhere Abtastrate zu erzielen oder bei gleicher Abtastrate mit einer geringeren Rechenleistung auszukommen.

Das lösungsgemäße Verfahren und die lösungsgemäße Vorrichtung erfordern keinen zusätzlichen apparativen Aufwand im Vergleich zur Vorrichtung, die in US 5,141,097 beschrieben ist. Ein übliches Bildaufnahmegerät und eine übliche Recheneinheit zur Bildauswertung reichen aus. Nicht erforderlich ist es, durch Auswertung einer komplexen Kontur eines Objekts auf der Förder-Komponente zu ermitteln, aus wie vielen Gegenständen dieses Objekt besteht. Insbesondere ist es nicht erforderlich, Kanten von Objekten zu ermitteln, welche in Abbildern vom Mess-Ausschnitt gezeigt werden. Weiterhin ist es nicht erforderlich, im Abbild geometrische Konturen von abgebildeten Objekten zu identifizieren, z. B. Rechtecke. Diese Auswerteschritte erfordern Rechenzeit und setzen Vorwissen über die Konturen der zu transportierenden Gegenstände voraus.

Die Erfindung sieht vor, die bedeckte Fläche zu messen und aus der gemessenen bedeckten Fläche einen Wert für den Mengen-Parameter zu berechnen. In WO 2007/000441 A1 wird gerade der umgekehrte Weg beschrieben: Die Anzahl von Gegenständen (fungiert dort als der Mengen-Parameter) wird gemessen, und aus der gemessenen Anzahl wird die bedeckte Fläche abgeleitet.

Dank der Erfindung lässt sich der Mengen-Parameter auch dann messen, wenn die transportierten Gegenstände dergestalt auf der Förder-Komponente liegen und transportiert werden, dass die Gegenstände nicht voneinander beabstandet sind, sondern sich mehrere Gegenstände überlappen können. Dieser Fall tritt insbesondere dann auf, wenn flache Gegenstände zufällig auf die Förder-Komponente geschüttet werden und daher der Fall auftreten kann, dass mehrere Gegenstände gesehen in die Betrachtungsrichtung einer Kamera, die Abbilder vom Mess-Ausschnitt erzeugt - sich teilweise überlappen. Die Erfindung spart auch in dieser Situation die Notwendigkeit ein, die Gegenstände vor dem Messen des Mengen-Parameters zu vereinzeln, um einen Abstand zwischen jeweils zwei Gegenständen herzustellen. Vielmehr wird es sogar ermöglicht, den gemessenen Wert des Mengen-Parameters dazu zu verwenden, einen nachfolgenden Vereinzeler oder die Zufuhr von Gegenständen zu diesem Vereinzeler zu regeln und hierfür den Mengen-Parameter-Wert zu verwenden. Die Erfindung lässt sich aber auch für das Messen des Mengen-Parameters im Falle von bereits vereinzelten Gegenständen anwenden.

Die Erfindung setzt kein Vorwissen über die geometrische Gestalt der transportierten Gegenstände und keine Mengen-Annahmen voraus. Insbesondere ist es nicht erforderlich vorauszusetzen, dass die Gegenstände - gesehen aus der Betrachtungsrichtung des Bildaufnahmegeräts, welches die Aufnahmen erzeugt - alle rechteckig sind.

Die Erfindung erfordert als Sensorik lediglich ein einziges Bildaufnahmegerät. Nicht erforderlich ist es, mehrere Bildaufnahmegeräte vorzusehen, welche Aufnahmen aus verschiedenen Bildrichtungen erzeugen, um diese Aufnahmen kombiniert auszuwerten. Möglich ist es natürlich, verschiedene Bildaufnahmegeräte vorzusehen, z. B. um Redundanz zu erzeugen.

Nicht erforderlich ist es sicherzustellen, dass die Länge des Mess-Abschnitts - also die Abmessung des Mess-Abschnitts in der Transportrichtung - kleiner der oder gleich als die größte Abmessung eines zu transportierenden Gegenstands ist. Das Verfahren lässt sich vielmehr auch dann anwenden, wenn ein Gegenstand sowohl in die Transportrichtung als auch in die entgegengesetzte Richtung über den Mess-Abschnitt herausragt. Der Mess-Abschnitt kann die gesamte Breite der Förder-Komponente einnehmen oder einen Streifen im Inneren der Oberfläche der Förder-Komponente.

Vorzugsweise wird eine Abfolge von Abbildern des Mess-Ausschnitts erzeugt und laufend ausgewertet. Diese Ausgestaltung ermöglicht eine kontinuierliche Regelung der Geschwindigkeit, mit der die Förder-Komponente die Gegenstände zu einer nachfolgenden Verarbeitungs-Einrichtung transportiert werden. Eine ausreichend hohe Abtastrate lässt sich dank der Erfindung erzielen.

Die Frequenz des Aufnehmens wird vorzugsweise so eingestellt, dass die Frequenz proportional zur Transportgeschwindigkeit der Förder-Komponente ist.

Vorzugsweise werden mehrere aufeinander folgende Aufnahme-Zeitpunkte t[1], t[2], ... vorgegeben. An jedem vorgegebenen Aufnahme-Zeitpunkt t[1], t[2], ... wird jeweils mindestens eine Aufnahme von der Förder-Komponente erzeugt. Derjenige Mess-Ausschnitt, den die Aufnahme zu einem Aufnahme-Zeitpunkt t[i] zeigt, grenzt vorzugsweise direkt an denjenigen Mess-Ausschnitt an, den die Aufnahme vom unmittelbar vorhergehenden Aufnahme-Zeitpunk t[i-1] zeigt. Das verwendete Bildaufnahmegerät liefert Roh-Aufnahmen. Falls die gezeigten Mess-Ausschnitte sich überlappen, so wird der Überlappungsbereich herausgerechnet. Als Aufnahmen werden dann die verarbeitenden Aufnahmen verwendet, bei denen die Mess-Ausschnitte nahtlos aneinander angrenzen, nicht die Roh-Aufnahmen.

Vorzugsweise wird der funktionale Zusammenhang vorab experimentell ermittelt und abgespeichert. Diese Vorgehensweise setzt kein analytisches Modell für den funktionalen Zusammenhang voraus. Wiederholt wird der im Folgenden beschriebene Schritt durchgeführt. Mehrere Gegenstände werden von der Transport-Einrichtung oder einer entsprechenden Transport-Einrichtung - transportiert, wobei bekannt ist oder gemessen wird, welchen Wert der Mengen-Parameter für diese transportierten Gegenstände annimmt. Beispielsweise wird vorab gezählt, wie viele Gegenstände sich auf der Transport-Einrichtung befinden. Gemessen wird, welche Fläche von diesen Gegenständen bedeckt wird. Einerseits werden verschiedene Schritte mit unterschiedlichen Werten für den Mengen-Parameter durchgeführt. Andererseits werden aber auch mehrere Schritte für denselben Wert des Mengen-Parameters durchgeführt, wobei die Gegenstände aber unterschiedlich dicht auf der Förder-Komponente liegen. Im Falle von flachen Gegenständen werden unterschiedliche Überlappungsgrade hergestellt. Dies bedeutet, dass unterschiedlich viele Gegenstände sich jeweils teilweise überlappen. Die verschiedenen Messwerte für denselben Mengen-Parameter-Wert werden zu einem Wert aggregiert, der in einen funktionalen Zusammenhang aufgenommen wird, z. B. als Mittelwert.

Der funktionale Zusammenhang lässt sich mittels einer realen Transport-Einrichtung und einer Stichprobe mit realen Gegenständen erzeugen. Möglich ist auch, dass mehrere Simulationsläufe mittels eines rechnerauswertbaren Simulationsmodells der Transport-Einrichtung durchgeführt werden. Für jeden Simulationslauf werden die Anzahl der zu transportierenden Gegenstände sowie die Umrisskontur jedes Gegenstands und die Position jedes Gegenstands im Mess-Ausschnitt vorgegeben. Möglich ist, dass ein Zufallsgenerator unterschiedliche Anzahlen und unterschiedliche Positionen und Umrisskonturen vorgibt.

In einer Anwendung der Erfindung transportiert die Transport-Einrichtung die Gegenstände zu einem Vereinzeler ("singulator"). Dieser Vereinzeler soll die Gegenstände dergestalt vereinzeln, dass ein Strom von zueinander beabstandeten Gegenständen den Vereinzeler verlässt. Der Vereinzeler soll also eine Reihenfolge unter den Gegenständen herstellen, wobei der Abstand zwischen zwei aufeinander folgenden Gegenständen stets annähernd gleich einem vorgegebenen Soll-Abstand ist, der für alle Gegenstände gleich ist ("constant gap"). In dieser Anwendung wird als Mengen-Parameter erfindungsgemäß das so genannte Vereinzelungspotential verwendet, das ist die Summe der Längen der Gegenstände im Messausschnitt zuzüglich des Soll-Abstands hinter jedem dieser Gegenstände. Als Länge wird die Abmessung des Gegenstands gesehen in die Transportrichtung beim Transport nach dem Vereinzeln verwendet. Bei zwei Gegenständen mit 100 mm Länge und zwei Gegenständen mit 150 mm Länge und einem Soll-Abstand von 20 mm beträgt der Wert für das Vereinzelungspotential (2 * 100) + (2 * 150) + (3 * 20) = 560 [mm]. Ein Soll-Vereinzelungspotential des Vereinzelers als Maß für den Gegenstands-Abfluss von Gegenständen vom Vereinzeler weg wird vorgegeben. Die Erfindung wird hier dazu verwendet, um den Strom von Gegenständen zum Vereinzeler so zu regeln, dass der Zufluss zum Vereinzeler etwas gleich dem Abfluss vom Vereinzeler ist und sowohl der Fall vermieden wird, dass der Vereinzeler keine Gegenstände mehr zum vereinzeln erhält, noch der Fall vermieden wird, dass ein Rückstau von Gegenständen vor dem Vereinzeler auftritt.

Die transportierten Gegenstände sind z. B. flache Postsendungen, Geldscheine, Papierbögen oder Chipkarten.

Im Folgenden wird die Erfindung anhand eines Ausführungsbeispiels beschrieben. Dabei zeigen:

Fig. 1    die Vorrichtung des Ausführungsbeispiels schematisch in Seitenansicht,

Fig. 2    die Vorrichtung von Fig. 1 in Draufsicht,

Fig. 3    drei verschiedene Belegungen des Zuführ-Förderbands mit Postsendungen,

Fig. 4    einen funktionalen Zusammenhang zwischen der von Postsendungen bedeckten Fläche und der Anzahl von Postsendungen und

Fig. 5    einen funktionalen Zusammenhang zwischen der von Postsendungen bedeckten Fläche und einem Mengen-Parameter.

Im Ausführungsbeispiel werden das lösungsgemäße Verfahren und die lösungsgemäße Vorrichtung dazu verwendet, um flache Postsendungen (Großbriefe, Standardbriefe, Kataloge, Postkarten und ähnliches) zu verarbeiten. Eine Verarbeitungs-Einrichtung verarbeitet diese Postsendungen. Um einen möglichst hohen Durchsatz durch die Verarbeitungs-Einrichtung zu erzielen, ohne eine Überlastung der Verarbeitungs-Einrichtung oder einen Rückstau von Postsendungen zu riskieren, soll die Ist-Zuführ-Rate zur Verarbeitungs-Einrichtung geregelt werden und nicht zu stark von einer vorgegebenen Soll-Zuführ-Rate differieren.

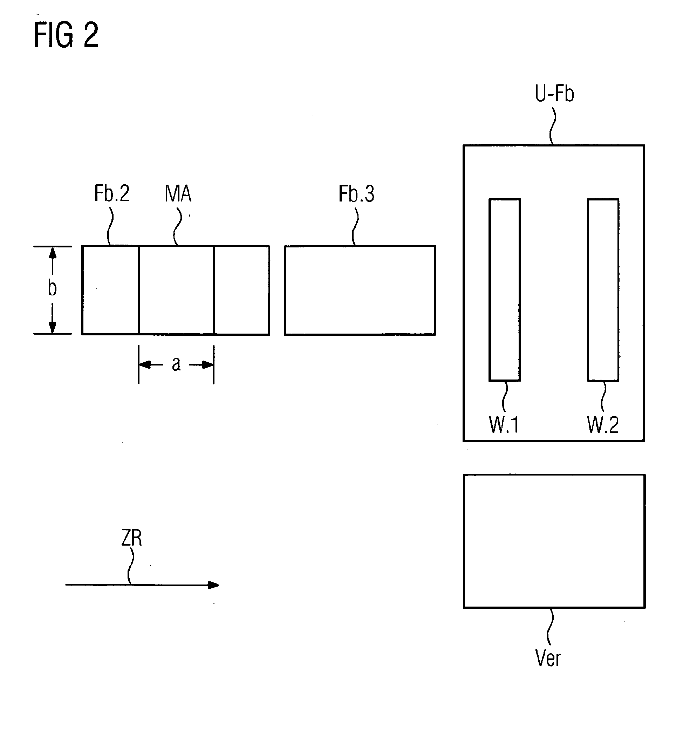

Fig. 1 zeigt schematisch die Vorrichtung des Ausführungsbeispiels in Seitenansicht. Fig. 2 zeigt die Vorrichtung von Fig. 1 schematisch in Draufsicht.

Ein Zuführ-Förderband Z-Fb umfasst zwei waagerechte Endlos-Förderbänder Fb.1, Fb.2 sowie ein schräges Zuführ-Förderband Fb.3, welche Postsendungen in eine Zuführrichtung ZR transportieren.

Die zu verarbeitenden Postsendungen werden in zufälliger Reihenfolge und zufälliger Anordnung auf ein Endlos-Förderband der Zuführ-Einrichtung Z-Fb geschüttet. Jedes Endlos-Förderband Fb.1, Fb.2, Fb.3 ist um mindestens zwei Rollen herum geführt. Genau eine Rolle wird angetrieben, alle anderen Rollen sind als Laufrollen ausgestaltet. Jede Rolle ist auf einer waagerechten oder schrägen Welle oder Achse montiert. Möglich ist, dass eine Welle oder Achse höher als eine andere Welle oder Achse angeordnet ist. Jedes Endlos-Förderband Fb.1, Fb.2, Fb.3 vermag daher die flachen Postsendungen in eine waagerechte oder auch schräg geneigte Transportrichtung zu transportieren.

Jedes Endlos-Förderband Fb.1, Fb.2, Fb.3 gehört zur Zuführ-Einrichtung des Ausführungsbeispiels. Die Gesamtheit der Endlos-Förderbänder Fb.1, Fb.2, Fb.3 wird im Folgenden insgesamt als "Zuführ-Förderband Z-Fb" bezeichnet. Die Zuführ-Einrichtung fungiert im Ausführungsbeispiel als die Transport-Einrichtung, das Zuführ-Förderband Z-Fb als die Förder-Komponente.

Die Postsendungen werden an einer Aussortierstation vorbeigeführt. In dieser Aussortierstation werden diejenigen Postsendungen aus der Verarbeitung genommen, die nicht maschinell verarbeitbar sind und daher nicht die Verarbeitungs-Einrichtung erreichen sollen, außerdem sonstige Gegenstände, die in die Verarbeitung gelangt sind. Diese Aussortierstation wird in den Figuren nicht gezeigt. Vorzugsweise werden die Postsendungen zunächst an der Aussortierstation vorbeigeführt und erreichen danach das Zuführ-Förderband Z-Fb. Die nicht maschinell verarbeitbaren Postsendungen und sonstige Gegenstände erreichen damit gar nicht das Zuführ-Förderband Z-Fb.

Anschließend werden die Postsendungen vom Zuführ-Förderband Z-Fb an einer Vorrichtung vorbeigeführt. Diese Vorrichtung besitzt

-    einen lösungsgemäßen Sensor Sen,

-    eine Regelungseinrichtung mit einem Regler Re und einem Aktor Ak sowie

-    drei Antriebe An.1, An.2, An.3 für die drei Endlos-Förderbänder Fb.1, Fb.2, Fb.3.

Der Sensor Sen umfasst

- eine Lichtquelle Li,

- eine Kamera Ka und

- eine Bildauswerteeinheit BAE.

Die Lichtquelle der Kamera Ka beleuchtet den im Folgenden beschriebenen Mess-Ausschnitt MA des Zuführ-Förderbands Z-Fb gleichmäßig und blendfrei.

Bevorzugt sendet die Lichtquelle Li weißes oder Infrarotlicht aus. Um einen möglichst großen Kontrast zu erzielen, ist die Oberfläche des Zuführ-Förderbands Z-Fb aus einem dunklen und matten, also nicht glänzenden Werkstoff gefertigt. Eine Postsendung ist in der Regel weiß oder hat eine andere helle Farbe, so dass ein großer Kontrast zwischen der dunklen Oberfläche des Zuführ-Förderbands Z-Fb und den hellen Postsendungen, die auf dem dunklen Zuführ-Förderband Z-Fb liegen, erzielt wird.

Im Ausführungsbeispiel umfasst die Lichtquelle Li zwei Einzel-Lichtquellen Li.1, Li.2, die aus zwei verschiedenen Richtungen denselben Mess-Ausschnitt auf den Zuführ-Förderband Z-Fb beleuchten. Möglich ist auch, dass nur eine oder mehr als zwei Lichtquellen verwendet werden, welche den Mess-Ausschnitt MA aus verschiedenen Richtungen beleuchten. In einer Ausgestaltung wird das Zuführ-Förderband Z-Fb indirekt beleuchtet, und zwar durch diffuse Reflexion.

Die Kamera Ka ist oberhalb des Zuführ-Förderbands Z-Fb angeordnet und vermag Abbilder von dem Mess-Ausschnitt MA auf der Oberfläche des Zuführ-Förderbands Z-Fb aufzunehmen. Dieser Mess-Ausschnitt MA ist zum Beispiel ein Rechteck mit den Kantenlängen a und b und wird in Fig. 2 veranschaulicht. Im Ausführungsbeispiel wird als Mess-Ausschnitt MA ein Ausschnitt der Oberfläche des Endlos-Förderbands Fb.2 beleuchtet. Hierbei bezeichnet a die Länge des Mess-Ausschnitts MA gesehen in die Transportrichtung TR, in die das Zuführ-Förderband Z-Fb Postsendungen transportiert.

Die Breite b ist in einer Ausgestaltung gleich der Breite des Zuführ-Förderbands Z-Fb. In einer anderen Ausgestaltung ist die Breite b kleiner, so dass der Mess-Ausschnitt MA in einem Streifen im Inneren des Zuführ-Förderbands Z-Fb liegt. In diesem Fall ist der Wert des Mengen-Parameters MP zu vergrößern, z. B. um den Quotienten aus der Breite des Zuführ-Förderbands Z-Fb und der Breite b des Mess-Ausschnitts MA.

In einer Ausgestaltung steht die Abbildungsrichtung der Kamera Ka senkrecht auf der Oberfläche des Zuführ-Förderbands Z-Fb und damit senkrecht auf dem Mess-Ausschnitt. Möglich ist aber auch, dass diese Abbildungsrichtung schräg auf der Oberfläche des Zuführ-Förderbands Z-Fb steht, z. B. weil die Kamera Ka auf diese Weise besser geschützt ist oder weil der vorhandene Platz besser ausgenützt wird.

Die Kamera Ka braucht lediglich eine vergleichsweise niedrige Auflösung aufzuweisen, zum Beispiel eine Auflösung gemäß dem VGA-Standard. Ausreichend ist es, eine Schwarzweißbild-Kamera zu verwenden. Daher kann die Kamera Ka preisgünstiger und robuster ausgeführt werden als bei anderen Vorrichtungen.

Die Bildauswerteeinheit BAE wertet die Abbilder aus, die von der Kamera Ka erzeugt werden, und erzeugt Messwerte in Form von Signalen, die an den Regler Re übermittelt werden. Die Bildauswerteeinheit BAE umfasst

- eine Parameterwerte-Berechnungs-Einheit PWB, die aus den Abbildern die Werte für den Mengen-Parameter MP berechnet, sowie

- einen Datenspeicher DSp für einen funktionalen Zusammenhang zwischen dem Mengen-Parameter MP und dem bedeckten Anteil.

Die Regelungseinrichtung Re, Ak verarbeitet Messwerte vom Sensor Sen und steuert den Aktor Ak an. Der Aktor Ak sendet Stellbefehle an die Antriebe An.1, An.2, An.3 für die angetriebenen Rollen des Zuführ-Förderbands Z-Fb. Diese Antriebe An.1, An.2, An.3 vermögen die angetriebenen Rollen für das Zuführ-Förderband Z-Fb mit einer steuerbaren Geschwindigkeit v zu bewegen und dadurch zu bewirken, dass das Zuführ-Förderband Z-Fb Gegenstände mit einer steuerbaren Transportgeschwindigkeit v zur Verarbeitungs-Einrichtung transportiert. In Fig. 1 zeigen dünne Pfeile Datenflüsse und dicke Pfeile physikalische Flüsse.

Im Ausführungsbeispiel steuert der Aktor Ak die Antriebe An.1, An.2, An.3 dergestalt an, dass diese die drei Endlos-Förderbänder Fb.1, Fb.2, Fb.3 mit gleicher und zeitlich veränderlicher Geschwindigkeit v drehen.

Das Zuführ-Förderband Z-Fb, das im Ausführungsbeispiel aus mehreren Abschnitten Fb.1, Fb.2, Fb.3 besteht, transportiert die Postsendungen weiter zu einer Verarbeitungs-Einrichtung.

In einer Ausführungsform ist diese Verarbeitungs-Einrichtung eine Formattrenn-Einrichtung, die die Postsendungen auf vorgegebenen Formatklassen aufteilt. Diese Formattrenn-Einrichtung ist zum Beispiel eine Trommel mit Schlitzen, so wie sie aus US 5,141,097 oder DE 100 38 690 C1 bekannt ist.

In einer anderen Ausführungsform ist die Verarbeitungs-Einrichtung ein Vereinzeler ("singulator"), der aufrecht stehende flache Postsendungen vereinzelt. Flussaufwärts vom Vereinzeler ist daher eine Aufricht-Vorrichtung angeordnet. Diese Aufricht-Vorrichtung richtet die bislang liegenden Postsendungen auf, so dass jede Postsendung nach dem Aufrichten auf einer Kante steht.

Die Aufricht-Vorrichtung ist z. B. als "Wasserfall" ausgestaltet und besitzt eine Kante, über den die Postsendungen hinabrutschen. In einer anderen Ausgestaltung besitzt die Aufricht-Vorrichtung schräge Bleche, über welche die Postsendungen hinweg transportiert werden.

Fig. 1 und Fig. 2 zeigen schematisch einen "Wasserfall". Zwei glatte Wände W.1 und W.2 sowie ein Unterflur-Förderband U-Fb bilden zusammen einen Transportkanal Tk. Dieser Transportkanal Tk transportiert Postsendungen in die Transportrichtung TR, die senkrecht auf der Zeichenebene von Fig. 1 steht. Jede Postsendung steht hierbei auf einer Kante auf dem Unterflur-Förderband U-Fb, und das Unterflur-Förderband U-Fb wird angetrieben. Jede Postsendung lehnt an eine Seitenwand W.1 oder W.2 an. Das schräge Endlos-Förderband Fb.3 transportiert liegende Postsendungen zu einer Kante, die von der Wand W.1 gebildet wird. Die Postsendungen fallen diese Kante hinab, weswegen diese Ausgestaltung "Wasserfall" heißt, bis die Postsendungen vom Unterflur-Förderband U-Fb gestützt werden.

Die dergestalt aufgerichteten Postsendungen werden zum Vereinzeler ("singulator") Ver transportiert. Der Vereinzeler Ver vereinzelt den Strom von aufrecht stehenden Postsendungen. Eine Abfolge von zueinander beabstandeten Postsendungen verlässt den Vereinzeler Ver in die Transportrichtung TR. Zwischen jeweils zwei aufeinander folgenden Postsendungen tritt eine Lücke auf, die größer oder gleich einer vorgegebenen Mindestlücke ist.

In allen Ausführungsformen des Ausführungsbeispiels weist die Verarbeitungs-Einrichtung einen Soll-Durchsatz auf. Die Anzahl - oder ein anderer Mengen-Parameter-Wert pro Zeiteinheit - von Postsendungen, welche die Verarbeitungs-Einrichtung verlassen, soll innerhalb eines vorgegebenen Sollbereichs für den Durchsatz liegen. Dieser Soll-Bereich für den Durchsatz kann auch ein einziger Sollwert sein.

Jede Postsendung, welche zur Verarbeitungs-Einrichtung transportiert wird, verlässt später die Verarbeitungs-Einrichtung. In der Verarbeitungs-Einrichtung soll kein Stau von Postsendungen entstehen, der zu einem Rückstau von Postsendungen in einer flussaufwärts liegenden Einheit führen soll. Andererseits soll die Verarbeitungs-Einrichtung nicht leer laufen, d. h. es sollen sich stets einige zu verarbeitende Postsendungen vor der Verarbeitungs-Einrichtung befinden. Daher resultiert aus dem vorgegebenen Soll-Durchsatz ein Sollbereich für einen Fluss-Parameter, der die Menge der Postsendungen beschreibt, die pro Zeiteinheit die Verarbeitungs-Einrichtung erreichen.

In einer Ausgestaltung wird als Fluss-Parameter die Anzahl von Gegenständen, die pro Zeiteinheit die Verarbeitungs-Einrichtung erreichen, verwendet. Möglich ist auch, die Summen der Längen dieser Gegenstände - gesehen in die Transportrichtung T des Zuführ-Förderbands Z-Fb - pro Zeiteinheit zu messen und als Fluss-Parameter zu verwenden. Als "Länge" wird die Ausdehnung einer Postsendung in Transportrichtung T bezeichnet.

Eine andere Ausgestaltung wird angewendet, wenn die Verarbeitungs-Einrichtung flache Postsendungen so vereinzelt, dass eine Abfolge von Postsendungen mit jeweils einer definierten Lücke zwischen zwei aufeinander folgenden Postsendungen erzielt wird. Diese Lücke zwischen der Hinterkante einer vorauslaufenden Postsendung und der Vorderkante der nachfolgenden Postsendung soll größer oder gleich einem vorgegebenen Mindestabstand sein, welche von der Ausgestaltung einer nachfolgenden Verarbeitungs-Einrichtung abhängt. Als Fluss-Parameter wird das so genannte "Vereinzelungspotential" pro Zeiteinheit verwendet. Das Vereinzelungspotential ist die Summe der Längen aller Postsendungen, die pro Zeiteinheit die Verarbeitungs-Einrichtung erreichen und zu vereinzeln sind, zuzüglich der Summe der Lückenlängen zwischen diesen Gegenständen, die durch das Vereinzeln erzeugt werden, plus der Lückenlänge nach dem letzten der vereinzelten Gegenstände.

Erst durch das Vereinzeln werden Abstände zwischen jeweils zwei Postsendungen hergestellt. Vor dem Vereinzeln sind diese Abstände und daher die Längen der Lücken nicht bekannt. In einer Ausgestaltung wird ein Mindestabstand zwischen zwei Postsendungen, die nacheinander den Vereinzeler verlassen, vorgegeben. Die Lücke, die der Vereinzeler herstellen soll, ist mindestens so lang wie der Mindestabstand, aber möglichst auch nicht größer. Als Lückenlänge wird der vorgegebene Mindestabstand verwendet.

In einer anderen Ausgestaltung werden die Abstände zwischen Gegenständen, die bereits zuvor vereinzelt wurden, gemessen. Aus diesen gemessenen Lückenlängen wird eine durchschnittliche Lückenlänge berechnet, z. B. indem der Mittelwert oder ein gleitender oder gewichteter Mittelwert gebildet werden.

Wie oben dargelegt, beschreibt der Fluss-Parameter die Zufuhr von Postsendungen pro Zeiteinheit zur Verarbeitungs-Einrichtung. Der Fluss-Parameter hängt von einem gewünschten Durchsatz durch die Verarbeitungs-Einrichtung ab. Der Wert dieses Fluss-Parameters hängt unter anderem von folgenden Größen ab:

- der Anzahl von Postsendungen, die pro Zeiteinheit auf das Zufuhr-Förderband Z-Fb geschüttet werden,

- der Transportgeschwindigkeit v, mit der das Zufuhr-Förderband Z-Fb diese Postsendungen zur Aufricht-Vorrichtung transportiert, und

- der Transportgeschwindigkeit, mit der das Unterflur-Förderband U-Fb Postsendungen zur Verarbeitungs-Einrichtung transportiert.

Die Anzahl geschütteter Postsendungen ist zwangsläufig veränderlich. Der Aktor Ak steuert die Antriebe An.1, An.2, An.3 für die Förderbänder Fb.1, Fb.2, Fb.3 des Zuführ-Förderbands Z-Fb mit einer zeitlich veränderlichen Geschwindigkeit v an. Daher ist auch der Fluss-Parameter eine zeitlich veränderliche Größe. Die beiden Ereignisse, dass

- eine bestimmte Anzahl Postsendungen pro Zeiteinheit auf das Zufuhr-Förderband Z-Fb geschüttet werden und

- dass das Zufuhr-Förderband Z-Fb eine bestimmte Transportgeschwindigkeit v annimmt,

wirken sich mit zwei verschiedenen zeitlichen Verzögerungen auf die Zufuhr von Postsendungen zur Verarbeitungs-Einrichtung aus.

Ein übergeordneter Regler Re erhält als Vorgabe einen Sollwert FP_Soll für den Fluss-Parameter als Menge von Postsendungen pro Zeiteinheit, welche die Verarbeitungs-Einrichtung erreichen. Weiterhin wertet der Regler Re in einer Ausgestaltung Messwerte vom Sensor Sen mit der Kamera Ka und der Bildauswerteeinheit BAE aus. Der Regler Re berechnet aus diesen Messwerten die erforderliche Transportgeschwindigkeit v des Zuführ-Förderbands Z-Fb und des Unterflur-Förderbands U-Fb. In einer Ausgestaltung misst ein weiterer Sensor den Fluss von Postsendungen auf dem Unterflur-Förderband U-Fb und übermittelt seine Messwerte ebenfalls an den Regler Re. Der Regler Re übermittelt die erforderliche Transportgeschwindigkeit v_Soll als Vorgabe an den Aktor Ak.

In der Ausgestaltung, welche in den Figuren gezeigt wird, benötigt der Regler nicht die Kenntnis, wie groß die aktuelle Transportgeschwindigkeit v des Zuführ-Förderbands Z-Fb ist. Möglich ist aber, dass diese aktuelle Transportgeschwindigkeit v auch an den Regler Re übermittelt wird.

Der Aktor Ak verarbeitet die Messwerte vom Streckentaktgeber TG und die Sollwerte vom übergeordneten Regler Re. Der Aktor Ak berechnet aus der Soll-Transportgeschwindigkeit v_Soll für das Zuführ-Förderband Z-Fb Stellbefehle und übermittelt diese berechneten Stellbefehle an den Aktor Ak. Der Aktor Ak steuert die Antriebe An.1, An.2, An.3 des Zuführ-Förderbands Z-Fb entsprechend an, um diese Soll-Transportgeschwindigkeit v_Soll herzustellen. Vorzugsweise wiederholt sich diese gesamte Abfolge laufend.

In einer Ausgestaltung sind die Antriebe An.1, An.2, An.3 des Zuführ-Förderbands Z-Fb als Servomotor ausgestaltet. Der Servomotor realisiert eine ihm vorgegebene Soll-Transportgeschwindigkeit v_Soll. Die Ist-Geschwindigkeit v, die der Aktor Ak an den Servomotoren einstellt und mit der das Zuführ-Förderband Z-Fb die Postsendung transportiert, ist daher gleich der Soll-Transportgeschwindigkeit v_Soll, welche der Regler Re berechnet und dem Aktor Ak vorgegeben hat, die der Aktor Ak in Befehle an die Antriebe An.1, An.2, An.3 umsetzt und mit welcher das Zuführ-Förderband Z-Fb die Postsendung transportiert. Ein zusätzlicher Tachometer, der die tatsächliche Transportgeschwindigkeit v misst, ist nicht erforderlich.

In einer anderen Ausgestaltung sind die Antriebe An.1, An.2, An.3 als ungeregelter Antrieb ausgestaltet. Der Aktor Ak gibt eine andere physikalische Größe als die Transportgeschwindigkeit v vor, und die Antriebe An.1, An.2, An.3 setzen diese andere Größe um, z. B. die Stromstärke oder die Spannung, und erzeugt dadurch eine Transportgeschwindigkeit v.

Ein Tachometer ist dabei erforderlich. Die Ist-Geschwindigkeit v des Zuführ-Förderbands Z-Fb wird gemessen. Beispielsweise erzeugt ein Tachometer in Form eines Streckentaktgebers TG einen Impuls pro Wegstrecke, den das Zuführ-Förderband Z-Fb und somit eine Postsendung auf dem Zuführ-Förderband Z-Fb zurücklegen. Die Anzahl der Impulse pro Zeiteinheit ist proportional zur Ist-Geschwindigkeit v des Zuführ-Förderbands Z-Fb. Der Aktor Ak wertet Signale vom Streckentaktgeber TG aus und übermittelt Befehle an die Antriebe An.1, An.2, An.3, so dass die Antriebe An.1, An.2, An.3 die Förderbänder Fb.1, Fb.2, Fb.3 mit einer Ist-Geschwindigkeit v bewegen, die gleich dem vorgegebenen Wert v_Soll ist.

Die Kamera Ka erzeugt an mehreren aufeinander folgenden Aufnahme-Zeitpunkten t[i] (1=1, ...) jeweils eine Aufnahme Aufn[i] vom Mess-Ausschnitt MA. Im Ausführungsbeispiel ist die Kamera Ka ortsfest angebracht. Alle Mess-Ausschnitte sind gleich groß. Ein Mess-Ausschnitt MA liegt auf der Oberfläche des Zuführ-Förderbands Z-Fb und wird mitsamt dem Zuführ-Förderband Z-Fb zur Verarbeitungs-Einrichtung transportiert, also mit der veränderlichen Transportgeschwindigkeit v. Die ortsfeste Kamera Ka erzeugt Aufnahmen mit einem zeitlich konstanten Blickfeld von hintereinander folgenden Mess-Ausschnitten.

Die Postsendungen, die sich an einem Aufnahme-Zeitpunkt t[i] im Mess-Ausschnitt befinden, werden auf dem Zuführ-Förderband Z-Fb mitsamt dem Mess-Ausschnitt bis zum zeitlich nächsten Aufnahme-Zeitpunkt t[i+1] um eine Wegstrecke weitertransportiert. Die Länge dieser Wegstrecke ist das Produkt aus dem zeitlichen Abstand zwischen t[i+1] und t[i] und der gemessenen Ist-Geschwindigkeit v des Zuführ-Förderbands Z-Fb.

In einer Ausgestaltung besitzt die Kamera Ka einen Eingang für Trigger-Signale. Über diesen Trigger-Eingang lässt sich von außen und praktisch ohne Zeitverzögerung der Vorgang auslösen, dass die Kamera Ka eine Aufnahme vom Mess-Ausschnitt MA erzeugt. Indem diese Ansteuerung durchgeführt wird, lässt sich die Bildaufnahmefrequenz $\lambda$, mit der die Kamera Ka Aufnahmen erzeugt, von außen über den Trigger-Eingang steuern. Dieser Trigger-Eingang wird beispielsweise direkt oder über den Aktor Ak mit dem Streckentaktgeber TG verbunden, so dass die Bildaufnahmefrequenz $\lambda$ proportional zur Anzahl der Impulse pro Zeiteinheit ist, die der Streckentaktgeber TG generiert. Dadurch wird bewirkt, dass die Bildaufnahmefrequenz $\lambda$ stets proportional zur Ist-Geschwindigkeit v des Zuführ-Förderbands Z-Fb ist.

Vorzugsweise werden die Aufnahmen Aufn[1], Aufn[2], ... so erzeugt, dass der Mess-Ausschnitt vom Zuführ-Förderband Z-Fb, den die Kamera Ka zu einem Aufnahme-Zeitpunkt t[i] erzeugt, unmittelbar und ohne Zwischenraum und ohne Überlappung an denjenigen Mess-Ausschnitt MA angrenzt, den die Kamera Ka zum zeitlich vorhergehenden Aufnahme-Zeitpunkt t(i-1) erzeugt hat. Falls die Aufnahmefrequenz $\lambda$ proportional zur Ist-Transportgeschwindigkeit v ist, so legt das Zuführ-Förderband Z-Fb zwischen zwei aufeinander folgenden Aufnahme-Zeitpunkten t[i], t[i+1] stets den gleichen Weg zurück, egal wie groß die Transportgeschwindigkeit v ist. In diesem Fall lässt sich die Ausgestaltung, dass die gezeigten Mess-Ausschnitte unmittelbar aneinander grenzen, einfach dadurch erreichen, dass jeder n-te Impuls des Streckentaktgebers TG die Erzeugung einer Aufnahme durch die Kamera Ka auslöst. Die Anzahl n und die Position der Kamera Ka relativ zu dem Zuführ-Förderband Z-Fb lassen sich geeignet justieren.

Diese Ausgestaltung lässt sich aber insbesondere dann nicht realisieren, wenn sich die Bildaufnahmefrequenz $\lambda$ der Kamera Ka nicht von außen steuern lässt. In diesem Fall erzeugt die Kamera Ka Roh-Aufnahmen, und zwar so, dass zwei zeitlich unmittelbar aufeinander folgende Roh-Aufnahmen zu den Zeitpunkten t[i] und t[i+1] zwei Mess-Ausschnitte zeigen, die sich teilweise überlappen. Die Bildauswerteinheit BAE bereitet diese Roh-Aufnahmen auf und erzeugt aufbereitete Aufnahmen. Die Abfolge der aufbereiteten Aufnahmen Aufn[1], Aufn[2], ... zeigt unmittelbar aneinander angrenzende Mess-Ausschnitte, die sich nicht überlappen. Die aufbereiteten Aufnahmen werden ausgewertet, um die Mengen-Parameter-Werte zu berechnen.

Die Bildauswerteinheit BAE wertet in beiden Ausgestaltungen die jeweilige Aufnahme Aufn[i] von jedem Aufnahme-Zeitpunkt t[i] aus und berechnet durch die Auswertung der Aufnahmen einen Wert, den ein Mengen-Parameter MP zum Aufnahme-Zeitpunkt t[i] annimmt. Der Mengen-Parameter MP ist ein Maß für die zeitlich veränderliche Menge von Gegenständen, hier also von flachen Postsendungen, in diesem Mess-Ausschnitt MA. Der Mess-Ausschnitt MA ist vorzugsweise so breit, dass er die gesamte Breite der Förder-Komponente Z-Fb abdeckt, dass also keine Postsendung seitlich neben dem Mess-Ausschnitt liegt. Die Länge MA des Mess-Ausschnitts MA wird einmal vorab gemessen und ist zeitlich konstant.

Die Abfolge von Werten für den Mengen-Parameter MP, nämlich jeweils ein Wert pro Aufnahme-Zeitpunkt t[i], wird vom Sensor Sen an den Regler Re übermittelt. Außerdem wird eine Abfolge von Sollwerten für den Fluss-Parameter an den Regler Re übermittelt. Der Regler Re berechnet eine Abfolge von Soll-Transportgeschwindigkeiten v_Soll des Zuführ-Förderbands Z-Fb. Diese Abfolge wird an den Aktor Ak übermittelt. Der Aktor Ak steuert die Antriebe An.1, An.2, An.3 des Zuführ-Förderbands Z-Fb so wie oben beschrieben an, damit das Zuführ-Förderband Z-Fb die Soll-Transportgeschwindigkeit v_Soll herstellt.

In einer Ausgestaltung ist der Fluss-Parameter die Anzahl der Gegenstände pro Zeiteinheit, die das Zuführ-Förderband Z-Fb verlassen und die Aufricht-Vorrichtung erreichen. In dieser Ausgestaltung liefert der Sensor als Wert des Mengen-Parameters MP einen Näherungswert für die jeweilige Anzahl von Postsendungen im Mess-Ausschnitt MA.

In der erfindungsgemäßen Ausgestaltung wird als Fluss-Parameter das oben beschriebene "Vereinzelungspotential" verwendet. Als Wert des Mengen-Parameters MP wird die Summe der Längen der Postsendungen, die sich jeweils im Mess-Ausschnitt MA befinden, zuzüglich der Summe der Längen der zu erzeugenden Lücken zwischen diesen Postsendungen (Summe der Abstände) plus der Länge der erzeugenden Lücke nach der letzten zu vereinzelnden Postsendung verwendet.

Im Folgenden wird beschrieben, wie der Sensor Sen für jeden Aufnahme-Zeitpunkt t[i] jeweils einen Wert des Mengen-Parameters MP ermittelt.

Die Bildauswerteinheit BAE wertet jede Aufnahme von einem Mess-Ausschnitt aus. Diese Auswertung wird mit dem Ziel durchgeführt, um zu ermitteln, welchen Anteil an der Gesamtfläche des Mess-Ausschnitts derjenige Teilbereich des Mess-Ausschnitts einnimmt, der von Postsendungen bedeckt wird. Im Ausführungsbeispiel liegen diese Postsendungen im Mess-Ausschnitt auf dem Zuführ-Förderband Z-Fb. Hierbei wird nicht unterschieden, ob ein Punkt des Mess-Ausschnitts von einer einzigen Postsendung oder von mehreren übereinander liegenden Postsendungen bedeckt wird. Denn um dies festzustellen, würde man entweder ein weiteres Bildaufnahmegerät, welches Aufnahmen von der Seite erzeugt, und eine Auswerteeinheit für diese Aufnahmen einsetzen müssen. Oder ein Abstandssensor oder Höhensensor misst ein Höhenprofil von den Postsendungen im Mess-Ausschnitt MA. Beides ist aufwendig und dank der Erfindung nicht erforderlich.

Eine Ausgestaltung, um den Anteil der bedeckten Fläche an der Gesamtfläche des Mess-Ausschnitts zu messen, wird im Folgenden beschrieben.

Diese im Folgenden beschriebene Ausgestaltung erfordert wenig Rechenzeit für die Bildauswertung und liefert richtige Ergebnisse. Sie erfordert keinerlei Annahmen über die Form der transportierten Gegenstände, hier Postsendungen.

Jede Aufnahme Aufn[i] wird vorzugsweise von einer Digitalkamera Ka erzeugt, die viele kleine Bildaufnahme-Komponenten besitzt. Deshalb besteht die Aufnahme Aufn[i] vom Mess-Ausschnitt aus vielen einzelnen Bildpunkten ("pixels"), die in einer Matrix angeordnet sind, wobei B[i,k,j] der Bildpunkt in der Zeile k und der Spalte j dieser Matrix ist, wobei k=1, ..., M und j=1, ..., N ist. Die Aufnahme hat also M x N Bildpunkte.

Jede Bildaufnahme-Komponente der Kamera Ka misst die jeweilige Lichtintensität in dieser Komponente. Dadurch misst die Kamera Ka für jeden Bildpunkt B[i,k,j] jeweils einen Intensitätswert I[i,k,j] (k=1, ..., M; j=1, ..., N). Die Aufnahme wird binarisiert. Dadurch wird ein Binärbild Bin mit M x N Binärwerten erzeugt. Hierfür wird eine Schranke I_min vorgegeben. I_min ist der minimale Intensitätswert des von einer Postsendung, die auf dem Zuführ-Förderband Z-Fb liegt, reflektierten und die Kamera Ka erreichenden Lichts. Das Binärbild hat M x N Binärwerte Bin[i,k,j] (i=1, ..., M; j=1, ..., N). Die M x N Binärwerte werden gemäß der Rechenvorschrift Bin[i, k, j] = 1, falls I[i,k,j] >= I_min ist, und ansonsten Bin [i, k, j] = 0 berechnet.

Derjenige Teilbereich des Mess-Ausschnitts, der zum Aufnahme-Zeitpunkt t[i] von den Postsendungen bedeckt wird, nimmt einen Anteil Anteil[i] an der gesamten Fläche des Mess-Ausschnitts ein. Dieser Anteil ist gleich der Summe über alle Binärwerte, dividiert durch die Anzahl aller Binärwerte, wird also gemäß der Rechenvorschrift

$$\text{Anteil}[i] = \sum_{k=1}^{M} \sum_{j=1}^{N} \text{Bin}[i, k, j] / (M * N)$$

berechnet. Diese Rechenvorschrift liefert also den Anteil aller Bildpunkte B[i,k,j] mit Intensitätswerten I[i,k,j] >= I_min an allen M * N Bildpunkten.

Auch andere Ausgestaltungen sind möglich. Der von Postsendungen bedeckte Teilbereich des Mess-Ausschnitts wird in der Regel von mindestens einem geschlossenen Streckenzug begrenzt, der aus mehreren einzelnen Strecken besteht. Das bedeckte Gebiet kann aus mehreren einzelnen, nicht zusammenhängenden Gebieten bestehen. In dem Gebiet, welches von einem Streckenzug umschlossen wird, können Löcher sein. Die Begrenzung eines solchen Lochs hat ebenfalls die Form eines Streckenzugs.

Die Fläche eines solchen Gebietes lässt sich mit geeigneten Verfahren der Bildauswertung berechnen.

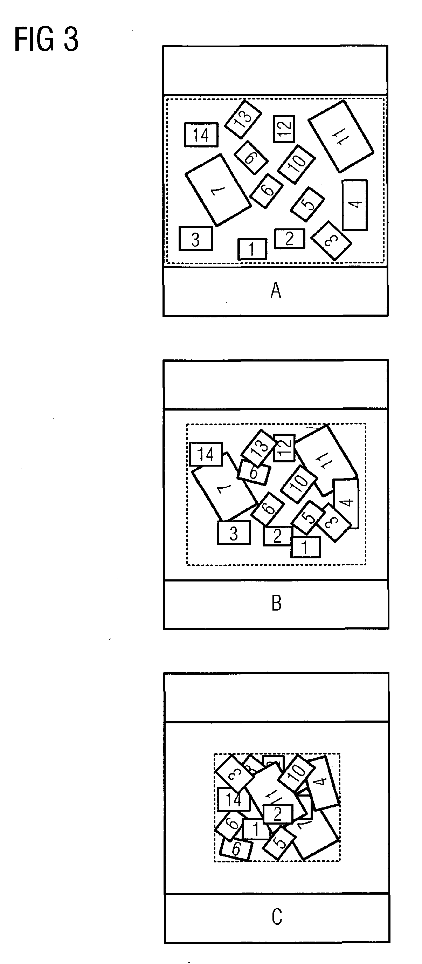

Fig. 3 zeigt beispielhaft drei unterschiedlich dichte Belegungen des Zuführ-Förderbands mit jeweils derselben Menge von Postsendungen, die auf dem Zuführ-Förderband Z-Fb liegen.

Dieselben Postsendungen belegen drei unterschiedliche Teilbereiche eines Mess-Ausschnitts.

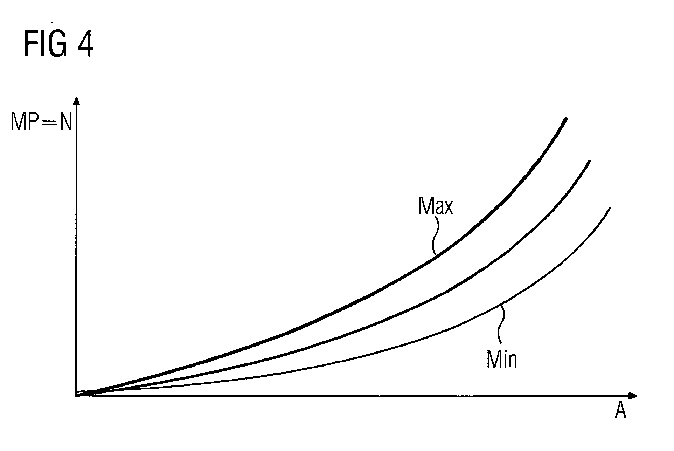

Fig. 4 zeigt beispielhaft drei theoretisch ermittelte funktionale Zusammenhänge zwischen

- der Anzahl N von Postsendungen auf dem Zuführ-Förderband Z-Fb (y-Achse) und

- dem Anteil der Fläche auf der Oberfläche, die von diesen Postsendungen bedeckt wird, an der gesamten Fläche (x-Achse).

Für einen x-Wert liefern die drei y-Werte drei verschiedene Anzahlen von Postsendungen bei gleichem bedecktem Anteil. In Fig. 4 wird also als Mengen-Parameter MP die Anzahl von Postsendungen verwendet. Die untere Kurve in Fig. 4 zeigt die minimale Anzahl, die obere Kurve die maximale Anzahl bei gleichem bedecktem Anteil (x-Achse). Die drei funktionalen Zusammenhänge resultieren aus unterschiedlich dichten Belegungen, wie dies in Fig. 3 veranschaulicht wird. In Fig. 4 ist zu sehen, dass der funktionale Zusammenhang relativ wenig bei unterschiedlich dichten Belegungen variiert und die Varianz auch bei höheren Belegungsdichten nur mäßig zunimmt.

In einer Ausgestaltung besitzt die Bildauswerteeinheit BAE des Sensors Sen eine Parameter-Werte-Berechnungseinheit und einen Datenspeicher DSp, in dem ein rechnerausführbarer funktionaler Zusammenhang Zus zwischen

- dem Mengen-Parameter MP und

- dem Anteil der Fläche des bedeckten Gebiets an der gesamten Fläche des Mess-Ausschnitts MA abgespeichert ist.

In einer anderen Ausgestaltung wird der funktionale Zusammenhang durch wenige Parameter z. B. eines Polynoms gekennzeichnet, und zu jedem Berechnungszeitpunkt wird der benötigte Wert berechnet.

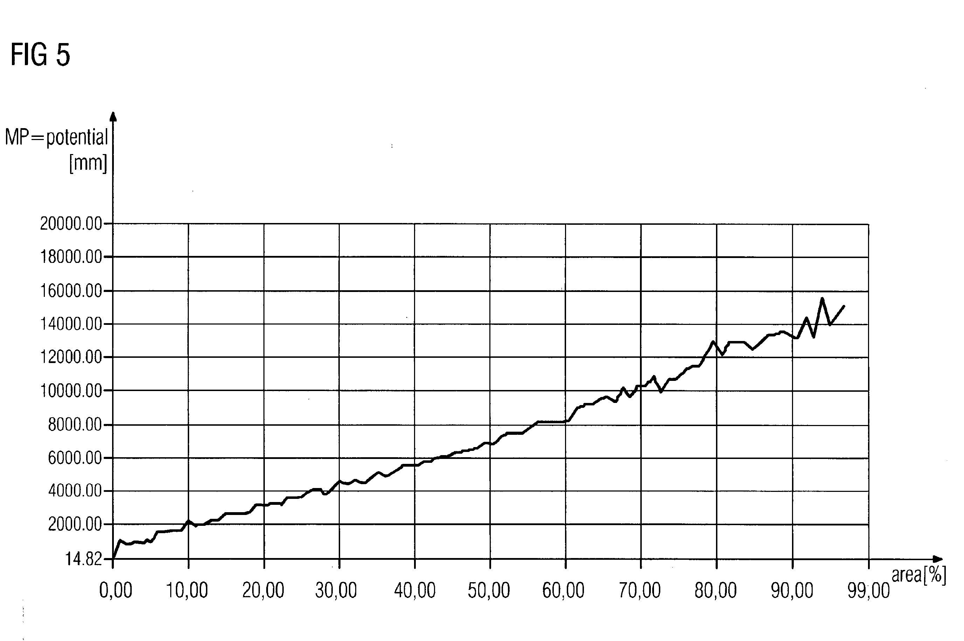

Fig. 5 zeigt einen beispielhaften funktionalen Zusammenhang Zus zwischen dem Mengen-Parameter "Vereinzelungspotential" (Y-Achse) und dem Anteil der bedeckten Fläche des Mess-Ausschnitts MA (x-Achse), wobei der Zusammenhang experimentell ermittelt wurde. Zu sehen ist, dass der experimentell ermittelte Zusammenhang gut mit dem Zusammenhang übereinstimmt, der theoretisch zu erwarten ist und den Fig. 4 zeigt.

Weiterhin ist zu sehen, dass die Kurve von Fig. 5 nur geringfügig nicht-linear ansteigt, also nicht progressiv.

Daher liefert die Auswertung des funktionalen Zusammenhangs, den Fig. 5 veranschaulicht, sowohl bei niedriger als auch bei hoher Überdeckung zuverlässig einen guten Näherungswert für den Mengen-Parameter-Wert. Auch bei hohen überdeckten Anteilen ist also noch eine Unterscheidung zwischen verschiedenen Werten des Mengen-Parameters möglich.

Der bedeckte Anteil, also der Quotient aus bedeckter Fläche und gesamter Fläche des Mess-Ausschnitts, wird so wie gerade beschrieben berechnet, wobei die gesamte Fläche des Mess-Ausschnitts MA zeitlich konstant bleibt und die bedeckte Fläche so wie oben beschrieben durch Bildauswertung gemessen wird.

An die Parameter-Werte-Berechnungseinheit des Sensors Sen wird der ermittelte bedeckte Anteil übermittelt. Die Berechnungseinheit wertet den abgespeicherten funktionalen Zusammenhang aus und liefert für jeden Aufnahme-Zeitpunkt t[i] jeweils einen Wert für den Mengen-Parameter. Diese Abfolge von Werten für den Mengen-Parameter wird im Ausführungsbeispiel an den Regler Re übermittelt.

Der im Datenspeicher DSp abgespeicherte funktionale Zusammenhang Zus wird vorzugsweise vorab experimentell erzeugt. Hierfür werden vorzugsweise verschiedene Stichproben mit flachen Postsendungen vorgegeben. Die Stichproben unterscheiden sich durch die Anzahl der Postsendungen, aus denen die jeweilige Stichprobe besteht, sowie u. U. durch verschiedenartige Postsendungen.

Für jede Stichprobe wird mindestens einmal, vorzugsweise mehrmals, folgende Abfolge durchgeführt:

- Die Postsendungen der Stichprobe werden auf das Zuführ-Förderband Z-Fb geschüttet.

- Das Zuführ-Förderband Z-Fb transportiert die Postsendungen an der Kamera Ka vorbei.

- Die Kamera Ka erzeugt mindestens eine Aufnahme von diesen Postsendungen, so dass alle Postsendungen sich zum Aufnahme-Zeitpunkt im Mess-Ausschnitt MA befinden.

- Diese mindestens eine Aufnahme wird ausgewertet, und der von den Postsendungen bedeckte Anteil des Mess-Ausschnitts MA wird so wie oben beschrieben durch Bildauswertung ermittelt.

- Exakt gemessen wird, welchen Wert der Mengen-Parameter für diese Stichprobe tatsächlich annimmt. Beispielsweise wird die Stichprobe gezählt.

Jede Abfolge liefert jeweils einen Messpunkt in einem x-y-Diagramm, bei dem auf der x-Achse der bedeckte Anteil z. B. in Prozent und auf der y-Achse der Mengen-Parameter eingetragen wird. Falls zum gleichen Wert des bedeckten Anteils verschiedene Messwerte für den Mengen-Parameter gemessen werden, so wird über diese gemittelt.

In einer Ausgestaltung wird die Abfolge mit realen Postsendungen und mit einer realen Kamera Ka durchgeführt. In einer anderen Ausgestaltung wird jede Abfolge durch eine Computersimulation nachgebildet, wobei ein Zufallsgenerator die simulierten Postsendungen in einer Stichprobe zufällig auf ein simuliertes Zuführ-Förderband verteilt.

Der funktionale Zusammenhang wird vorzugsweise mittels einer Regressionsanalyse ermittelt. Beispielsweise wird vorgegeben, dass der funktionale Zusammenhang die Form $y = a\_2*x^2+a\_1*x+a\_0$ oder die Form $y = a\_2*exp(a\_1.x)+a\_0$ haben soll, und die drei Parameter $a\_2$, $a\_1$ und $a\_0$ werden so bestimmt, dass die Fehlerquadratsumme oder ein anderes Fehlermaß minimiert werden. Der dergestalt generierte funktionale Zusammenhang Zus wird in dem Datenspeicher DSp der Berechnungseinheit des Sensors Sen abgespeichert.

In einer Ausgestaltung wird der abgespeicherte funktionale Zusammenhang im laufenden Betrieb permanent adaptiert. Diese Ausgestaltung setzt voraus, dass zu einem späteren Zeitpunkt gemessen wird, welchen Wert der Mengen-Parameter an einem Aufnahme-Zeitpunkt t[i] tatsächlich angenommen hatte. Beispielsweise wird zu einem späteren Zeitpunkt gemessen, wie viele Postsendungen sich am Aufnahme-Zeitpunkt t[i] tatsächlich im Mess-Ausschnitt befanden. Weil die Ist-Transportgeschwindigkeit v des Zuführ-Förderbands Z-Fb laufend gemessen wird, lässt sich ermitteln, wann die Postsendungen, die sich zum Aufnahme-Zeitpunkt t[i] im Mess-Ausschnitt unter der Kamera Ka befanden, die nachfolgende Verarbeitungs-Einrichtung durchlaufen haben. Nach dem Durchlaufen lässt sich der Mengen-Parameter mit relativ geringem Aufwand und exakt messen. Die Anzahl sowie das Vereinzelungspotential von Postsendungen lassen sich leicht exakt messen, wenn die Postsendungen bereits vereinzelt wurden.

Für jeden Aufnahme-Zeitpunkt t[i] werden

- so wie oben beschrieben der bedeckte Anteil im Mess-Ausschnitt und

- zu einem späteren Zeitpunkt der tatsächliche Wert, den der Mengen-Parameter zum Zeitpunkt t[i] annahm, gemessen. Jede Messung liefert einen Wert in dem oben beschriebenen x-y-Diagramm.

In einer Ausgestaltung wird eine erneute Regressionsanalyse durchgeführt, z. B. so wie oben beschrieben.

EP 2 375 380 B1

Möglich ist es, für diese Regressionsanalyse die im laufenden Betrieb bislang gewonnenen Wertepaare sowie zumindest zu Beginn des laufenden Betriebs zusätzlich diejenigen Wertepaare, die vorab mittels der Stichproben experimentell bestimmt wurden, zu verwenden.

In einer Abwandlung wird der funktionale Zusammenhang dadurch adaptiert, dass der Arbeitspunkt des funktionalen Zusammenhangs durch einen "Offset" verschoben wird. Sei f_vorab der vorab experimentell bestimmte funktionale Zusammenhang. Der korrigierte funktionale Zusammenhang f_korr wird gemäß der Rechenvorschrift

$$f\_korr(x) = f\_vorab(x + offset)$$

bestimmt.

Vorzugsweise wird der "Offset" so bestimmt, dass die Abweichung zwischen Werten, des Mengen-Parameters, die der Sensor Sen liefert, und später exakt gemessenen Werten minimiert wird. Der "Offset" wird z. B. unter Verwendung der letzten N Messwerte bestimmt, wobei N>1 eine vorgegebene Anzahl ist. Somit wird ein gleitendes Fenster von Messwerten verwendet. Der "Offset" wird so bestimmt, dass ein vorgegebenes Maß für den Fehler minimiert wird, z. B. eine gewichtete Fehlerquadratsumme.

Bezugszeichenliste

| Bezugszeichen | Bedeutung |
|---|---|
| a | Länge des Mess-Ausschnitts MA gesehen in Transportrichtung |
| Ak | Aktor, steuert die Antriebe An.1, An.2, An.3 an |
| An. 1, An.2, An.3 | Antriebe des Zuführ-Förderbands Z-Fb |
| Anteil[i] | Anteil an der gesamten Fläche des Mess-Ausschnitts, der zum Aufnahme-Zeitpunkt t[i] von Postsendungen bedeckt wird (i=1, 2, ...) |
| Aufn [i] | Aufnahme zum Aufnahme-Zeitpunkt t[i] des Mess-Ausschnitts |
| b | Breite des Mess-Ausschnitts MA gesehen senk-recht zur Transportrichtung |
| BAE | Bildauswerteeinheit des Sensors Sen |
| B[i,k,j] | Bildpunkt in der Zeile k und der Spalte j ei-ner Aufnahme vom Mess-Ausschnitt für den Auf-nahme-2eitpunkt t[i] (i=1, ..., M; j=1, ..., N) |
| Bin[i,k,j] | Binärwert des Bildpunkts B[i,k,j] |
| DSp | Datenspeicher mit dem vorab ermittelten funk-tionalen Zusammenhang zwischen dem bedeckten Anteil und dem Mengen-Parameter |
| Fb.1, Fb.2 | Waagerechte Endlos-Förderbänder des Zuführ-Förderbands Z-Fb |
| Fb.3 | Schräges Endlos-Förderband des Zuführ-Förderbands Z-Fb |
| FP Soll | vorgegebener Sollwert für den Fluss-Parameter |
| I[i,k,j] | Intensitätswert des Bildpunkts B[i,k,j] |
| I_min | minimaler Intensitätswert von einer Postsen-dung |
| λ | Aufnahmefrequenz der Kamera Ka |
| Ka | Kamera des Sensors Sen |
| Li | Lichtquelle des Sensors Sen |
| Li.1, Li.2 | Einzel-Lichtquellen der Lichtquelle Li |
| MA | Mess-Ausschnitt auf dem Endlos-Förderband Fb.2 |
| MP | Mengen-Parameter |

13

(fortgesetzt)

| Bezugszeichen | Bedeutung |
|---|---|
| PWB | Parameter-Werte-Berechnungseinheit PWB |
| Re | übergeordnete Regler |
| Sen | Sensor mit der Kamera Ka und der Bildauswerte-einheit BAE |
| t[1], t[2], ... | Aufnahme-Zeitpunkte |
| TG | Streckentaktgeber |
| Tk | Transportkanal |
| TR | Transportrichtung des Unterflur-Förderbands U-Fb |
| U-Fb | Unterflur-Förderband, welches Postsendungen zum Vereinzeler Ver transportiert |
| v | gemessene tatsächliche Transportgeschwindig-keit des Zuführ-Förderbands Z-Fb |
| v_Soll | Soll-Transportgeschwindigkeit des Zuführ-Förderbands Z-Fb, welche von dem Regler Re mittels des Aktors Ak vorgegeben wird. |
| Ver | Vereinzeler |
| w.1, W.2 | Wände des Transportkanals Tk |
| Z-Fb | Zuführ-Förderband |
| Zus | Rechnerauswertbarer funktionaler Zusammenhang zwischen dem bedeckten Anteil und dem Mengen-parameter MP |

**Patentansprüche**

1. Verfahren zum Transportieren von Gegenständen mittels einer Transport-Einrichtung (Fb.1, Fb.2, Fb.3, An.1, An.2, An.3),
wobei

- die Gegenstände auf einer Förder-Komponente (Fb.2) der Transport-Einrichtung (Fb.1, Fb.2, Fb.3, An.1, An.2, An.3) liegen und
- die Transport-Einrichtung (Fb.1, Fb.2, Fb.3, An.1, An.2, An.3) die Förder-Komponente (Fb.2) bewegt und dadurch die Gegenstände transportiert,
- ein Mengen-Parameter (MP), der den Transport der Gegenstände mittels der Transport-Einrichtung (Fb.1, Fb.2. Fb.3, An.1, An.2, An.3) beschreibt, automatisch gemessen wird,
- wobei die Gegenstände während des Messens auf der
Förder-Komponente (Fb.2) liegen und

wobei das Messen des Mengen-Parameters (MP) die Schritte umfasst, dass

- an mindestens einem Aufnahme-Zeitpunkt (t[i]) jeweils mindestens eine rechnerauswertbare Aufnahme (Aufn[i]) von einem Mess-Ausschnitt (MA) der Förder-Komponente (Fb.2) aufgenommen wird und
- ein Wert für einen Mengen-Parameter (MP), der die Menge von transportierten Gegenständen zum Aufnahme-Zeitpunkt (t[i]) beschreibt, ermittelt wird,

wobei jede Ermittlung des Mengen-Parameter-Werts den Schritt umfasst, dass die mindestens eine am Aufnahme-Zeitpunkt (t[i]) aufgenommene Aufnahme (Aufn[i]) ausgewertet wird,
für jeden Aufnahme-Zeitpunkt (t[i]) bei der Ermittlung des Mengen-Parameter-Werts gemessen wird,
welcher relative Anteil des jeweiligen Mess-Ausschnitts (MA) zu diesem Aufnahme-Zeitpunkt (t[i]) von Gegenständen, die auf der Förder-Komponente (Fb.2) liegen, bedeckt wird, wofür die an diesem Aufnahme-Zeitpunkt (t[i]) aufgenommene Aufnahme (Aufn[i]) des jeweiligen Mess-Ausschnitts (MA) ausgewertet wird, und
der Wert, den der Mengen-Parameter (MP) zum Aufnahme-Zeitpunkt (t[i]) annimmt, berechnet wird,
wofür ein vorgegebener rechnerausführbarer funktionaler Zusammenhang (Zus) zwischen

- dem Mengen-Parameter (MP) und
- dem bedeckten Anteil des Mess-Ausschnitts (MA) auf den gemessenen bedeckten Anteil angewendet wird, und die Transportgeschwindigkeit (v), mit der die Förder-Komponente (Fb.2) die Gegenstände transportiert, abhängig vom mindestens einem gemessenen Mengen-Parameter-Wert verändert wird, und

die transportierten Gegenstände flache Gegenstände sind, die Transport-Einrichtung (Fb.1, Fb.2, Fb.3, An.1, An.2, An.3) die flachen Gegenstände zu einer Vereinzelungs-Einrichtung (Ver) transportiert, wobei wenn die Vereinzelungs-Einrichtung (Ver) die flachen Gegenstände dergestalt vereinzelt,
dass eine Abfolge von zueinander beabstandeten Gegenständen die Vereinzelungs-Einrichtung (Ver) verlässt, wobei zwischen zwei aufeinander folgenden Gegenständen eine definierte Lücke auftritt,
als Mengen-Parameter (MP) die Summe der Länge aller Gegenstände im Mess-Ausschnitt (MA) zuzüglich der Summe der Längen aller zu erzeugenden Lücken zwischen den Gegenständen im Mess-Ausschnitt (MA) und der Länge der hinter dem letzten Gegenstand zu erzeugenden Lücke verwendet wird.

2. Verfahren nach Anspruch 1,
**dadurch gekennzeichnet, dass**
die Auswertung jede Aufnahme (Aufn[i]) die Schritte umfasst, dass

- im Abbild des Mess-Ausschnitts (MA) eine geschlossene Kurve um das Abbild desjenigen Teilausschnitts, der vonGegenständen auf der Förder-Komponente (Fb.2) bedeckt wird, gezogen wird,
- die Fläche des von dieser geschlossenen Kurve umschlossenen Gebiets gemessen wird und
- der bedeckte Anteil unter Verwendung der Fläche des umschlossenen Gebiets berechnet wird.

3. Verfahren nach Anspruch 2,
**dadurch gekennzeichnet, dass**
die Fläche desjenigen Teilausschnitts des Mess-Ausschnitts (MA), der von Gegenständen bedeckt wird, näherungsweise berechnet wird,
indem als Teilausschnitts-Fläche

- die Fläche des umschlossenen Gebiets oder
- das Produkt aus der Fläche des umschlossenen Gebiets um einen vorgegebenen Korrekturfaktor oder
- das Produkt aus der Fläche des umschlossenen Gebiets um einen Korrekturfaktor, der von der Anzahl der nicht bedeckten Löcher im umschlossenen Gebiet abhängt, verwendet wird und

der bedeckte Anteil als Quotient aus

- der näherungsweise berechneten Teilausschnitts-Fläche
und
- der Größe des Mess-Ausschnitts (MA)

berechnet wird.

4. Verfahren nach einem der Ansprüche 1 bis 3,
**dadurch gekennzeichnet, dass**
an mehreren aufeinander folgenden Aufnahme-Zeitpunkten (t[1], t[2],...) jeweils mindestens eine Aufnahme (Aufn[1], Aufn[2], ...) von der Förder-Komponente (Fb.2) erzeugt wird und
die Aufnahmen (Aufn[i]) so erzeugt werden,
dass derjenige Mess-Ausschnitt der Förder-Komponente (Fb.2), den eine an einem Aufnahme-Zeitpunkt (t[i]) erzeugte Aufnahme (Aufn[i]) zeigt,
unmittelbar an denjenigen Mess-Ausschnitt, den die am unmittelbar vorhergehenden Aufnahme-Zeitpunkt (t[i-1]) aufgenommene Aufnahme (Aufn[i-1]) zeigt, angrenzt.

5. Verfahren nach einem der Ansprüche 1 bis 4,
**dadurch gekennzeichnet, dass**
als Mengen-Parameter (MP) einer der folgenden Parameter verwendet wird:

- die Anzahl der Gegenstände im Mess-Ausschnitt (MA),
- die Summe der Längen aller Gegenstände im Mess-Ausschnitt (MA).

**6.** Verfahren nach einem der Ansprüche 1 bis 5,
**dadurch gekennzeichnet, dass**
die Längen der durch das Vereinzeln tatsächlich erzeugten Lücken zwischen den Gegenständen gemessen werden und die gemessenen Lückenlängen für die Berechnung des Mengen-Parameter-Werts für weitere zu vereinzelnde Gegenstände verwendet werden.

**7.** Verfahren nach einem der Ansprüche 5 bis 6,
**dadurch gekennzeichnet, dass**
die Transport-Einrichtung (Fb.1, Fb.2, Fb.3, An.1, An.2, An.3) die Gegenstände zu einer Verarbeitungs-Einrichtung (Ver) transportiert,
die Verarbeitungs-Einrichtung (Ver) die transportierten Gegenstände verarbeitet,
ein Sollbereich für einen Fluss-Parameter vorgegeben wird, wobei der Fluss-Parameter den Fluss von Gegenständen zur Verarbeitungs-Einrichtung (Ver) beschreibt,
eine Regelungseinrichtung (Re, Ak) die Transportgeschwindigkeit (v), mit der die Transport-Einrichtung (Fb.1, Fb.2, Fb.3, An.1, An.2, An.3) die Gegenstände transportiert, regelt,
wofür die Regelungseinrichtung (Re, Ak)

- den vorgegebenen Sollbereich für den Fluss-Parameter
und
- den mindestens einen gemessenen Wert für den Mengen-Parameter (MP)

verwendet,
die Regelungseinrichtung (RE, Ak)

- unter Verwendung des Sollbereichs einen Sollwert (FP_Soll) für den Fluss-Parameter berechnet und
- eine Soll-Transportgeschwindigkeit (v_Soll) berechnet,

wobei die Regelungseinrichtung (RE, Ak) für die Berechnung der Soll-Transportgeschwindigkeit (v_Soll) den Sollwert (FP_Soll) für den Fluss-Parameter und

- den mindestens einen gemessenen Wert für den Mengen-Parameter (MP)

verwendet, und
die Soll-Transportgeschwindigkeit (v) an die Transport-Einrichtung (Fb.1 Fb.2, Fb.3, An.1, An.2, An.3) übermittelt wird.

**8.** Verfahren nach einem der Ansprüche 1 bis 7,
**dadurch gekennzeichnet, dass**

- mindestens ein Wert für den Mengen-Parameter (MP), der die Menge von transportierten Gegenständen zu einem Aufnahme-Zeitpunkt (t[i]) beschreibt, zu einem späteren Zeitpunkt exakt gemessen wird und

der vorgegebene funktionale Zusammenhang (Zus) unter Verwendung des später exakt gemessenen Mengen-Parameter-Werts und des zum Aufnahme-Zeitpunkt (t[i]) bedeckten Anteils adaptiert wird.

**9.** Verfahren nach einem der Ansprüche 1 bis 8,
**dadurch gekennzeichnet, dass**
der funktionale Zusammenhang (Zus) experimentell bestimmt wird,
wobei wiederholt für eine Stichprobe von Gegenständen

- der Mengen-Parameter-Wert für die Gegenstände der Stichprobe und
- der von den Gegenständen der Stichprobe bedeckte Anteil
des Mess-Ausschnitts (MA)

gemessen wird.

**10.** Verfahren nach einem der Ansprüche 1 bis 9,
**dadurch gekennzeichnet, dass**

die Aufnahmen (Aufn[1], Aufn[2], ...) dergestalt erzeugt werden,
dass jede Aufnahme (Aufn[i]) jeweils mehrere Bildpunkte (B(i,k,j)) umfasst,
für mindestens eine Aufnahme (Aufn[i]) und jeden Bildpunkt (B[i,k,j]) dieser Aufnahme (Aufn[i]) jeweils ein Intensitätswert (I[i,k,j]) gemessen wird und
der Schritt zu messen, welcher Anteil des jeweiligen Mess-Ausschnitts (MA) zu einem Aufnahme-Zeitpunkt (t[i]) von Gegenständen bedeckt wird,
den Schritt umfasst, den Quotienten aus

- der Anzahl der Bildpunkte (B[i,k,j]) mit einem Intensitätswert größer als eine vorgegebene Schranke (I_min) und
- der Gesamt-Anzahl (M*N) der Bildpunkte (B[i,k,j]) der
Aufnahme (Aufn[i])

zu berechnen und als den bedeckten Anteil zu verwenden.

11. Anordnung zum Transportieren von Gegenständen,
wobei die Anordnung

- eine Transport-Einrichtung (Fb.1, Fb.2, Fb.3, An.1, An.2, An.3) und
- eine Vorrichtung zum automatischen Messen eines Mengen-Parameters (MP), der den Transport von Gegenständen mittels einer Förder-Komponente (Fb.2) beschreibt, und aufweist,

die Transport-Einrichtung (Fb.1, Fb.2, Fb.3, An.1, An.2, An.3) eine Förder-Komponente (Fb.2) aufweist,
die Förder-Komponente (Fb.2) dazu ausgestaltet ist, dass zu transportierende Gegenstände auf der Förder-Komponente (Fb.2) liegen,
die Transport-Einrichtung (Fb.1, Fb.2, Fb.3, An.1, An.2, An.3) dazu ausgestaltet ist, die Förder-Komponente (Fb.2) zu bewegen und dadurch die auf der Förder-Komponente (Fb.2) liegenden Gegenstände zu transportieren,
die Mess-Vorrichtung

- ein Bildaufnahmegerät (Ka) und
- eine Bildauswerteeinheit (BAE)

umfasst, das Bildaufnahmegerät (Ka) dazu ausgestaltet ist, an mindestens einem Aufnahme-Zeitpunkt (t[i]) jeweils mindestens eine Aufnahme (Aufn[i]) von einem Mess-Ausschnitt (MA) der Förder-Komponente (Fb.2) aufzunehmen,
die Bildauswerteeinheit (BAE) dazu ausgestaltet ist, einen Wert für einen Mengen-Parameter (MP), der die Menge von transportierten Gegenständen beschreibt, zu ermitteln, wobei die Bildauswerteeinheit (BAE) dazu ausgestaltet ist, bei jeder Ermittlung des Mengen-Parameter-Werts die mindestens eine am Aufnahme-Zeitpunkt (t[i]) aufgenommene Aufnahme (Aufn[i]) auszuwerten,
die Bildauswerteeinheit (BAE) eine Parameter-Werte-Berechnungseinheit (PWB) umfasst und
die Parameter-Werte-Berechnungseinheit (PWB) dazu ausgestaltet ist, den Mengen-Parameter-Wert zu berechnen,
**dadurch gekennzeichnet, dass**
die Bildauswerteeinheit (BAE) zusätzlich einen Zusammenhangs-Datenspeicher (DSp) umfasst,
im Zusammenhangs-Datenspeicher (DSp) ein rechnerausführbarer funktionaler Zusammenhang (Zus) zwischen

- dem Mengen-Parameter und
- dem bedeckten Anteil des Mess-Ausschnitts (MA) abgespeichert ist,

die Bildauswerteeinheit (BAE) dazu ausgestaltet ist, bei der Ermittlung des Mengen-Parameter-Werts für einen Aufnahme-Zeitpunkt (t[i]) zu messen,
welcher relative Anteil des jeweiligen Mess-Ausschnitts (MA) zu diesem Aufnahme-Zeitpunkt (t[i]) von Gegenständen, die auf der Förder-Komponente (Fb.2) liegen, bedeckt wird, und
wofür die Bildauswerteeinheit (BAE) die an diesem Aufnahme-Zeitpunkt (t[i]) aufgenommene Aufnahme (Aufn[i]) des jeweiligen Mess-Ausschnitts (MA) verwendet,
die Parameter-Werte-Berechnungseinheit (PWB) dazu ausgestaltet ist,
für die Berechnung des Mengen-Parameter-Werts den abgespeicherten funktionalen Zusammenhang (Zus) auf den gemessenen bedeckten Anteil anzuwenden,
die Anordnung weiterhin einen Aktor (Ak) aufweist und der Aktor (Ak) dazu ausgestaltet ist, die Transportgeschwindigkeit (v), mit der die Förder-Komponente (Fb.2) die Gegenstände transportiert, abhängig vom ermittelten Mengen-Parameter-Wert zu verändern, und wobei die transportierten Gegenstände flache Gegenstände

sind, die Transport-Einrichtung (Fb.1, Fb.2, Fb.3, An.1, An.2, An.3) die flachen Gegenstände zu einer Vereinzelungs-Einrichtung (Ver) transportiert, wobei wenn die Vereinzelungs-Einrichtung (Ver) die flachen Gegenstände dergestalt vereinzelt,

dass eine Abfolge von zueinander beabstandeten Gegenständen die Vereinzelungs-Einrichtung (Ver) verlässt, wobei zwischen zwei aufeinander folgenden Gegenständen eine definierte Lücke auftritt,

als Mengen-Parameter (MP) die Summe der Länge aller Gegenstände im Mess-Ausschnitt (MA) zuzüglich der Summe der Längen aller zu erzeugenden Lücken zwischen den Gegenständen im Mess-Ausschnitt (MA) und der Länge der hinter dem letzten Gegenstand zu erzeugenden Lücke verwendet wird.

**Claims**

1. Method for transporting objects by means of a transport device (Fb.1, Fb.2, Fb.3, An.1, An.2, An.3), wherein

   - the objects lie on a conveyor component (Fb.2) of the transport device (Fb.1, Fb.2, Fb.3, An.1, An.2, An.3) and
   - the transport device (Fb.1, Fb.2, Fb.3, An.1, An.2, An.3) moves the conveyor component (Fb.2) and, as a result, transports the objects,
   - a quantity parameter (MP) which describes the transport of the objects by means of the transport device (Fb.1, Fb.2, Fb.3, An.1, An.2, An.3) is automatically measured,
   - wherein the objects lie on the conveyor component (Fb.2)
   during the measurement, and

   wherein the measurement of the quantity parameter (MP) comprises the following steps:

   - at at least one recording time (t[i]), in each case at least one computer-evaluatable photograph (Aufn[i]) of a measurement sector (MA) of the conveyor component (Fb.2) is taken, and
   - a value for a quantity parameter (MP) which describes the quantity of objects transported at the recording time (t[i]) is determined,

   wherein each determination of the quantity parameter value includes the step of evaluating the at least one photograph (Aufn[i]) taken at the recording time (t[i]),
   for each recording time (t[i]) during the determination of the quantity parameter value, the relative proportion of the respective measurement sector (MA) which is covered at said recording time (t[i]) by objects lying on the conveyor component (Fb.2) is measured,
   for which purpose the photograph (Aufn[i]) of the respective measurement sector (MA) taken at said recording time (t[i]) is evaluated, and
   the value taken on by the quantity parameter (MP) at the recording time (t[i]) is calculated,
   for which purpose a prescribed, computer-executable, functional relationship (Zus) between

   - the quantity parameter (MP) and
   - the covered proportion of the measurement sector (MA)
   is applied to the covered proportion measured, and

   the transport speed (v) at which the conveyor component (Fb.2) transports the objects is changed depending on at least one measured quantity parameter value, and
   the transported objects are flat objects,
   the transport device (Fb.1, Fb.2, Fb.3, An.1, An.2, An.3) transports the flat objects to a singulating device (Ver), wherein if
   the singulating device (Ver) singulates the flat objects in such a manner
   that a sequence of spaced-apart objects leaves the singulating device (Ver),
   a defined clearance occurring between two consecutive objects, the sum of the length of all of the objects in the measurement sector (MA) plus the sum of the lengths of all of the clearances to be produced between the objects in the measurement sector (MA) and the length of the clearance to be produced behind the final object being used as the quantity parameter (MP).

2. Method according to Claim 1,
   **characterized in that**

the evaluation of each photograph (Aufn[i]) comprises the following steps:

- in the depiction of the measurement sector (MA) a closed curve is drawn around the depiction of that subsector which is covered by objects on the conveyor component (Fb.2),
- the area of the region enclosed by said closed curve is measured, and
- the covered proportion is calculated using the area of the enclosed region.

3. Method according to Claim 2,
**characterized in that**
the area of that subsector of the measurement sector (MA) which is covered by objects is calculated approximately by use being made, as the subsector area, of

- the area of the enclosed region, or
- the product of the area of the enclosed region after a prescribed correction factor, or
- the product of the area of the enclosed region after a correction factor which depends on the number of uncovered holes in the enclosed region, and

the covered proportion being calculated as a quotient from

- the approximately calculated subsector area and
- the size of the measurement sector (MA).

4. Method according to one of Claims 1 to 3,
**characterized in that**
in each case at least one photograph (Aufn[1], Aufn[2], ...) of the conveyor component (Fb.2) is produced at a plurality of successive recording times (t[1], t[2], ...), and
the photographs (Aufn[i]) are produced in such a manner that that measurement sector of the conveyor component (Fb.2) shown by a photograph (Aufn[i]) produced at a recording time (t[i])
is directly adjacent to that measurement sector shown by the photograph (Aufn[i-1]) taken at the immediately preceding recording time (t[i-1]).

5. Method according to one of Claims 1 to 4,
**characterized in that**
one of the following parameters is used as the quantity parameter (MP):

- the number of objects in the measurement sector (MA),
- the sum of the lengths of all of the objects in the measurement sector (MA).

6. Method according to one of Claims 1 to 5,
**characterized in that**
the lengths of the clearances actually produced between the objects by the singulating are measured, and
the measured clearance lengths are used for calculating the quantity parameter value for further objects which are to be singulated.

7. Method according to either of Claims 5 and 6, **characterized in that**
the transport device (Fb.1, Fb.2, Fb.3, An.1, An.2, An.3) transports the objects to a processing device (Ver),
the processing device (Ver) processes the transported objects, a desired region for a flow parameter is prescribed,
the flow parameter describing the flow of objects to the processing device (Ver),
a regulating device (Re, Ak) regulates the transport speed (v) at which the transport device (Fb.1, Fb.2, Fb.3, An.1, An.2, An.3) transports the objects,
for which purpose the regulating device (Re, Ak) uses

- the prescribed desired region for the flow parameter, and
- the at least one measured value for the quantity parameter (MP),

the regulating device (RE, Ak)

- using the desired region calculates a desired value (FP_Des) for the flow parameter, and
- a desired transport speed (v_Des),

the regulating device (RE, Ak) using

- the desired value (FP_Des) for the flow parameter, and
- the at least one measured value for the quantity parameter (MP)

for calculating the desired transport speed (v_Des), and
the desired transport speed (v) is transmitted to the transport device (Fb.1, Fb.2, Fb.3, An.1, An.2, An.3).

8. Method according to one of Claims 1 to 7,
   **characterized in that**

   - at least one value for the quantity parameter (MP) which describes the quantity of objects transported at a recording time (t[i]) is measured exactly at a later time, and
   - the prescribed functional relationship (Zus) is adapted using the quantity parameter value measured exactly later on and the proportion covered at the recording time (t[i]).

9. Method according to one of Claims 1 to 8,
   **characterized in that**
   the functional relationship (Zus) is ascertained experimentally,
   with the following measurements being carried out repeatedly for a sample of objects:

   - the quantity parameter value for the objects in the sample, and
   - the proportion of the measurement sector (MA) covered by the objects in the sample.

10. Method according to one of Claims 1 to 9,
    **characterized in that**
    the photographs (Aufn[1], Aufn[2], ...) are produced in such a manner
    that each photograph (Aufn[i]) in each case comprises a plurality of pixels (B[i,k,j]),
    an intensity value (I[i,k,j]) is measured in each case for at least one photograph (Aufn[i]) and each pixel (B[i,k,j]) of said photograph (Aufn[i]), and
    the step to measure the proportion of the respective measurement sector (MA) which is covered by objects at a recording time (t[i])
    involves the step of calculating the quotient from

    - the number of pixels (B[i,k,j]) having an intensity value greater than a prescribed limit (I_min) and
    - the overall number (M*N) of pixels (B[i,k,j]) in the photograph (Aufn[i])

    and of using said quotient as the covered proportion.

11. Arrangement for transporting objects,
    wherein the arrangement has

    - a transport device (Fb.1, Fb.2, Fb.3, An.1, An.2, An.3), and
    - an apparatus for automatically measuring a quantity parameter (MP) which describes the transport of objects by means of a conveyor component (Fb. 2), and

    the transport device (Fb.1, Fb.2, Fb.3, An.1, An.2, An.3) has a conveyor component (Fb.2),
    the conveyor component (Fb.2) is configured such that objects to be transported lie on the conveyor component (Fb.2),
    the transport device (Fb.1, Fb.2, Fb.3, An.1, An.2, An.3) is configured so as to move the conveyor component (Fb.2) and, as a result, to transport the objects lying on the conveyor component (Fb.2),
    the measuring apparatus comprises

- an image recording device (Ka) and

- an image evaluation unit (BAE), the image recording device (Ka) is configured so as, at at least one recording time (t[i]), to take in each case at least one photograph (Aufn[i]) of a measurement sector (MA) of the conveyor component (Fb.2), the image evaluation unit (BAE) is configured so as to determine a value for a quantity parameter (MP) which describes the quantity of objects transported,

wherein the image evaluation unit (BAE) is configured so as, during each determination of the quantity parameter value, to evaluate the at least one photograph (Aufn[i]) taken at the recording time (t[i]),

the image evaluation unit (BAE) comprises a parameter value calculation unit (PWB), and

the parameter value calculation unit (PWB) is configured so as to calculate the quantity parameter value,

**characterized in that**

the image evaluation unit (BAE) additionally comprises a relationship data memory (DSp),

the relationship data memory (DSp) stores a computer-executable functional relationship (Zus) between

- the quantity parameter and

- the covered proportion of the measurement sector (MA),

the image evaluation unit (BAE) is configured so as, during the determination of the quantity parameter value for a recording time (t[i]), to measure

the relative proportion of the respective measurement sector (MA) which is covered at said recording time (t[i]) by objects lying on the conveyor component (Fb.2), and

for this purpose the image evaluation unit (BAE) uses the photograph (Aufn[i]) of the respective measurement sector (MA) taken at said recording time (t[i]),

the parameter value calculation unit (PWB) is configured so as, for the calculation of the quantity parameter value, to apply the stored functional relationship (Zus) to the covered proportion measured,

the arrangement furthermore has an actuator (Ak) and

the actuator (Ak) is configured so as to change the transport speed (v) at which the conveyor component (Fb.2) transports the objects depending on the quantity parameter value determined, and

wherein the transported objects are flat objects,

the transport device (Fb.1, Fb.2, Fb.3, An.1, An.2, An.3) transports the flat objects to a singulating device (Ver), wherein if

the singulating device (Ver) singulates the flat objects in such a manner

that a sequence of spaced-apart objects leaves the singulating device (Ver),

a defined clearance occurring between two consecutive objects, the sum of the length of all of the objects in the measurement sector (MA) plus the sum of the lengths of all of the clearances to be produced between the objects in the measurement sector (MA) and the length of the clearance to be produced behind the final object is used as the quantity parameter (MP).

**Revendications**

1.  Procédé de transport d'objets au moyen d'un dispositif
    ( Fb.1, Fb.2, Fb.3, An.1, An.2, An.3 ) de transport, dans lequel

    - les objets reposent sur un composant ( Fb.2 ) de convoyeur du dispositif ( Fb.1 Fb.2, Fb.3, An.1, An.2, An.3 ) de transport et

    - le dispositif ( Fb.1, Fb.2, Fb.3, An.1, An.2, An.3 ) de transport met en mouvement le composant ( Fb.2 ) de convoyeur et transporte ainsi les objets,

    - on mesure automatiquement un paramètre ( MP ) de quantité, qui décrit le transport des objets au moyen du dispositif ( Fb.1, Fb.2, Fb.3, An.1, An.2, An.3 ) de transport,

    - les objets reposant pendant la mesure sur le composant
    ( Fb.2 ) de convoyeur et

    dans lequel la mesure du paramètre ( MP ) de quantité comprend les stades suivant lesquels

    - on enregistre, à au moins un instant ( t[i] ) d'enregistrement, respectivement au moins un enregistrement ( Aufn[i] ), pouvant être évalué par ordinateur, d'une partie ( MA ) de mesure du composant ( Fb.2 ) de convoyeur et

    - on détermine une valeur pour un paramètre ( MP ) de quantité, qui décrit la quantité d'objets transportés à l'instant ( t[i] ) d'enregistrement,

dans lequel chaque détermination de la valeur du paramètre de quantité comprend le stade suivant lequel on exploite le au moins un enregistrement ( Aufn[i] ) enregistré à l'instant ( t[i] ) d'enregistrement,
on mesure, pour chaque instant ( t[i] ) d'enregistrement, lors de la détermination de la valeur du paramètre de quantité,
la proportion relative de la partie ( MA ) de mesure respective, à cet instant ( t[i] ) d'enregistrement, d'objets qui reposent sur le composant ( Fb.2 ) de convoyeur qui est recouvert, en exploitant à cet effet l'enregistrement ( Aufn[i] ) enregistré à cet instant

( t[i] ) d'enregistrement de la partie ( MA ) de mesure respective, et
on calcule la valeur que prend le paramètre ( MP ) de quantité à l'instant ( t[i] ),
en utilisant pour cela une relation ( Zus ) fonctionnelle prescrite pouvant être exécutée par ordinateur entre

- le paramètre ( MP ) de quantité et
- la proportion recouverte de la partie ( MA ) de mesure à la proportion recouverte mesurée, et on modifie la vitesse

( v ) de transport à laquelle le composant ( Fb.2 ) de convoyeur transporte les objets, en fonction d'au moins une valeur mesurée du paramètre de quantité, et
les objets transportés sont des objets plats, le dispositif ( Fb.1 Fb.2, Fb.3, An.1, An.2, An.3 ) de transport transporte les objets plats à un dispositif ( Ver ) d'individualisation, dans lequel, lorsque
le dispositif ( Ver ) d'individualisation individualise les objets plats, de manière à ce que
une succession d'objets, à distance les uns des autres, quittent le dispositif ( Ver ) d'individualisation, un intervalle défini étant produit entre deux objets qui se suivent,
on utilise comme paramètre ( MP ) de quantité, la somme des longueurs de tous les objets dans la partie ( MA ) de mesure, additionnée de la somme des longueurs de tous les intervalles à produire entre les objets dans la partie ( MA ) de mesure et de la longueur des intervalles à produire derrière le dernier objet.

2. Procédé suivant la revendication 1,
**caractérisé**
**en ce que** l'exploitation de chaque enregistrement ( Aufn[i] ) comprend les stades suivant lesquels

- dans la reproduction de la partie ( MA ) de mesure, on trace une courbe fermée autour de la reproduction de chaque partie partielle qui est recouverte par des objets sur le composant ( Fb.2 ) de convoyeur,
- on mesure la surface de la zone entourée par cette courbe fermée et
- on calcule la proportion recouverte en utilisant la surface de la zone fermée.

3. Procédé suivant la revendication 2,
**caractérisé**
**en ce que** l'on calcule approximativement la surface de la partie partielle de la partie ( MA ) de mesure qui est recouverte d'objets,
en utilisant comme surface de la partie partielle

- la surface de la zone entourée ou
- le produit de la surface de la zone entourée par un facteur de correction donné à l'avance ou
- le produit de la surface de la zone entourée par un facteur de correction qui dépend du nombre de trous non recouverts dans la zone entourée et

on calcule la proportion recouverte comme étant le quotient de

- la surface de la partie partielle calculée approximativement et
- la grandeur de la partie ( MA ) de mesure.

4. Procédé suivant l'une des revendications 1 à 3, **caractérisé**
**en ce que** l'on produit à plusieurs instants ( t[1], t[2], ... ) d'enregistrement qui se suivent, respectivement au moins un enregistrement ( Aufn [1] , Aufn [2] , ... ) du composant ( Fb.2 ) de convoyeur et
on produit les enregistrements ( Aufn[i] ),
de manière à ce que chaque partie de mesure du composant ( Fb.2 ) de convoyeur, qui montre un enregistrement ( Aufn [i] ), produit à un instant ( t [i] ) d'enregistrement, soit directement voisine de la partie de mesure qui montre l'enregistrement ( Aufn[i-1] ) enregistré à l'instant ( t[i-1] ) d'enregistrement immédiatement précédent.

5. Procédé suivant l'une des revendications 1 à 4, **caractérisé en ce que** l'on utilise, comme paramètre ( MP ) de quantité, l'un des paramètres suivantes :

- le nombre des objets dans la partie ( MA ) de mesure,
- la somme des longueurs de tous les objets dans la partie ( MA ) de mesure.

6. Procédé suivant l'une des revendications 1 à 5, **caractérisé en ce que** l'on mesure la longueur des intervalles entre les objets produits effectivement par l'individualisation, et on utilise les longueurs des intervalles mesurés pour le calcul de la valeur du paramètre de quantité pour d'autres objets à individualiser.

7. Procédé suivant l'une des revendications 5 à 6, **caractérisé en ce que** le dispositif ( Fb.l, Fb.2, Fb.3, An.1, An.2, An.3 ) de transport transporte les objets à un dispositif ( Ver ) de traitement,
le dispositif ( Ver ) de traitement traite les objets transportés,
on prescrit une plage de consignes pour un paramètre de flux, le paramètre de flux décrivant le flux d'objets allant au dispositif ( Ver ) de traitement,
un dispositif ( Re, Ak ) de régulation régule la vitesse ( v ) de transport à laquelle le dispositif ( Fb.1, Fb.2, Fb.3, An.1, An.2, An.3 ) de transport transporte les objets,
le dispositif ( Re, Ak ) de régulation utilisant pour cela

- la plage de consigne donnée à l'avance pour le paramètre de flux et
- la au moins une valeur mesurée du paramètre ( MP ) de quantité

le dispositif ( Re, Ak ) de régulation calculant

- en utilisant la plage de consigne une valeur ( FP_Soll ) de consigne du paramètre de flux et
- une vitesse ( v_Soll ) de transport de consigne,

dans lequel le dispositif ( Re, Ak ) de régulation utilise pour le calcul de la vitesse ( v_Soll ) de transport de consigne, la valeur ( FP_Soll ) de consigne du paramètre de flux et

- la au moins une valeur mesurée du paramètre ( MP ) de quantité et

la vitesse ( v ) de transport de consigne est transmise au dispositif ( Fb.1, Fb.2, Fb.3, An.1, An.2, An.3 ) de transport.

8. Procédé suivant l'une des revendications 1 à 7, **caractérisé en ce que**

- on mesure exactement, à un instant ultérieur, au moins une valeur du paramètre ( MP ) de quantité qui décrit la quantité d'objets transportés à un instant ( t[i] ) d'enregistrement et
on adapte la relation ( Zus ) fonctionnelle donnée à l'avance, en utilisant la valeur du paramètre de quantité mesurée exactement ultérieurement et la proportion recouverte à l'instant ( t[i] ) d'enregistrement.

9. Procédé suivant l'une des revendications 1 à 8, **caractérisé en ce que**
l'on détermine expérimentalement la relation ( Zus ) fonctionnelle,
dans lequel, on mesure, de manière répétée, pour un échantillon d'objets

- la valeur du paramètre de quantité pour les objets de l'échantillon et
- la proportion de la partie ( MA ) de mesure recouverte par les objets de l'échantillon.

10. Procédé suivant l'une des revendications 1 à 9, **caractérisé**

**en ce que** l'on produit les enregistrements ( Aufn[1], Aufn [2] , ... ), de manière
à ce que chaque enregistrement ( Aufn[i] ) comprenne respectivement plusieurs pixels ( B[i, k, j] ),
on mesure pour chaque enregistrement ( Aufn[i] ) et pour chaque pixel ( B[i, k, j] ) de cet enregistrement ( Aufn[i] ),
respectivement une valeur ( I[i, k, j] ) d'intensité et
le stade dans lequel on mesure la proportion de la partie ( MA ) de mesure respective, qui est recouverte d'objets
à un instant ( t[i] ) d'enregistrement,
comprend le stade
de calcul du quotient

- du nombre de pixels ( B[i, k, j] ) ayant une valeur d'intensité plus grande qu'une limite ( I_min ) donnée à
l'avance et
- du nombre ( M*N ) total des pixels ( B[i, k, j] ) de
l'enregistrement ( Aufn[i] )

et de son utilisation comme étant la proportion recouverte.

11. Agencement de transport d'objets,
dans lequel l'agencement a

- un dispositif ( Fb.1, Fb.2, Fb.3, An.1, An.2, An.3 ) de transport et
- un dispositif de mesure automatique d'un paramètre ( MP ) de quantité, qui décrit le transport d'objets au
moyen d'un composant ( Fb.2 ) de convoyeur, et

le dispositif ( Fb.1, Fb.2, Fb.3, An.1, An.2, An.3 ) de transport a un composant ( Fb.2 ) de convoyeur,
le composant ( Fb.2 ) de convoyeur est conformé de manière à ce que des objets à transporter reposent sur le
composant ( Fb.2 ) de convoyeur,
le dispositif ( Fb.1, Fb.2, Fb.3, An.1, An.2, An.3 ) de transport est conformé de manière à mettre en mouvement le
composant ( Fb.2 ) de convoyeur et à transporter ainsi les objets reposant sur le composant ( Fb.2 ) de convoyeur,
le dispositif de mesure comprend

- un appareil ( Ka ) de prise de vues et
- une unité ( BAE ) d'exploitation d'images l'appareil ( Ka ) de prise de vues est conformé pour enregistrer, à
au moins un instant ( t[i] ) d'enregistrement, respectivement au moins un enregistrement ( Aufn[i] ) d'une partie
( MA ) de mesure du composant ( Fb.2 ) de convoyeur, l'unité ( BAE ) d'exploitation d'images est conformée
pour déterminer une valeur d'un paramètre ( MP ) de quantité qui décrit la quantité d'objets transportés, l'unité
( BAE ) d'exploitation d'images étant conformée pour, à chaque détermination de la valeur du paramètre de
quantité, exploiter le au moins un enregistrement ( Aufn[i] ) enregistré à l'instant ( t[i] ) d'enregistrement,

l'unité ( BAE ) d'exploitation d'images comprend une unité ( PWB ) de calcul de valeurs de paramètres et
l'unité ( PWB ) de calcul de valeurs de paramètres est conformée pour calculer la valeur de paramètres de quantité,
**caractérisé en ce que**
l'unité ( BAE ) d'exploitation d'images comprend en outre une mémoire ( DSp ) de données de relation,
dans la mémoire ( DSp ) de données de relation, est mémorisée une relation ( Zus ) fonctionnelle pouvant être
exécutée sur ordinateur entre

- le paramètre de quantité et
- la proportion recouverte de la partie ( MA ) de mesure, l'unité ( BAE ) d'exploitation d'images est conformée
pour mesurer, lors de la détermination de la valeur du paramètre de quantité à un instant ( t[i] ) de réception,

la proportion relative de la partie ( MA ) de mesure respective recouverte, à cet instant ( t[i] ) d'enregistrement,
d'objets qui reposent sur le composant ( Fb.2 ) de convoyeur, et
pour cela, l'unité ( BAE ) d'exploitation d'images utilise l'enregistrement ( Aufn[i] ) de la partie ( MA ) de mesure
respective enregistrée à cet instant ( t[i] ) d'enregistrement,
l'unité ( PWB ) de calcul de valeurs de paramètres étant conformée,
pour appliquer à la proportion recouverte mesurée la relation ( Zus ) fonctionnelle mémorisée pour le calcul de la
valeur du paramètre de quantité,
l'agencement ayant en outre un actionneur ( Ak ) et l'actionneur ( Ak ) étant conformé pour modifier la vitesse ( v )
de transport à laquelle le composant ( Fb.2 ) de convoyeur transporte les objets, en fonction de la valeur du paramètre de quantité, et

dans lequel les objets transportés sont des objets plats, l'unité ( Fb.l, Fb.2, Fb.3, An.1, An.2, An.3 ) de transport transporte les objets plats à un dispositif ( Ver ) d'individualisation, dans lequel, lorsque le dispositif ( Ver ) d'individualisation individualise les objets plats de manière à ce qu'une succession d'objets, à distance les uns des autres, quittent le dispositif ( Ver ) d'individualisation, en produisant un intervalle défini entre deux objets qui se suivent, on utilise comme paramètre ( MP ) de quantité, la somme des longueurs de tous les objets dans la partie ( MA ) de mesure, additionnée de la somme des longueurs de tous les intervalles à produire entre les objets dans la partie ( MA ) de mesure et de la longueur des intervalles à produire derrière le dernier objet.

# FIG 1

# FIG 2

U-Fb

Fb.2    MA          Fb.3

b

a

W.1        W.2

ZR

Ver

# FIG 3

FIG 4

# FIG 5

MP=potential [mm]

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007000441 A1
- US 5141097 A
- DE 4129135 A1
- DE 4129142 A1
- US 4940536 A
- US 20020046923 A1

- DE 1160792 A
- DE 4240094 C2
- US 3373685 A
- CH 463846
- DE 10038690 C1

**In der Beschreibung aufgeführte Nicht-Patentliteratur**

- **M. LOPEZ ; S. A. VELASTIN ; M. RODRIGEZ.** Passenger density measurement in a train carriage using image processing. *Proceed. 8th IFAC/IFIP/IFORS Symposium, Chania, Greece,* 16. Juni 1997, 961-966